# EUROPEAN PATENT APPLICATION

(11) **EP 4 266 787 A1**
(43) Date of publication of application: **25.10.2023**
(21) Application number: 21918608.7
(22) Date of filing: 15.01.2021
(51) Int. Cl.: H04W 72/04

(54) **COMMUNICATION METHOD AND APPARATUS BASED ON INTEGRATED ACCESS AND BACKHAUL**

(71) Applicant: Huawei Technologies Co., Ltd., Shenzhen, Guangdong 518129 (CN)
(72) Inventor: YUAN, Shitong, Shenzhen, Guangdong 518129 (CN); LIU, Fengwei, Shenzhen, Guangdong 518129 (CN)
(74) Representative: Epping - Hermann - Fischer
(86) International application number: PCT/CN2021/072283
(87) International publication number: WO 2022/151404

(57) **Abstract**

This application discloses a communication method and apparatus based on integrated access and backhaul. The method includes: An IAB node reports first information to a donor node of the IAB node, where the first information indicates a first condition, and the first condition is a condition under which an MT of the IAB node and a DU of the IAB node work synchronously; and under the first condition, the DU of the IAB node communicates with a lower-level node of the IAB node or a terminal device, and synchronously, the MT of the IAB node communicates with an upper-level node of the IAB node. The technical solutions provided in this application can effectively ensure that the MT of the IAB node and the DU of the IAB node work synchronously.

## Description

### TECHNICAL FIELD

This application relates to the field of communication technologies, and in particular, to a communication method and apparatus based on integrated access and backhaul.

### BACKGROUND

Continuous development of mobile communication technologies put a strain on spectrum resources. To improve spectrum utilization, base stations will be deployed more densely in the future. In addition, dense deployment may further avoid coverage holes. In a conventional cellular network architecture, a base station establishes a connection to a core network through an optical fiber. However, optical fiber deployment costs are very high in many scenarios. A wireless relay node (relay node, RN) establishes a connection to the core network through a wireless backhaul link, to reduce optical fiber deployment costs to some extent.

Usually, the relay node establishes a wireless backhaul link to one or more upper-level nodes (which may also be referred to as upstream nodes), and accesses the core network by using the upper-level node. The upper-level node may control (for example, perform data scheduling, timing modulation, and power control on) the relay node by using a plurality of types of signaling. In addition, the relay node may provide services for a plurality of lower-level nodes (which may also be referred to as downstream nodes). The upper-level node of the relay node may be a base station or another relay node. The lower-level node of the relay node may be a terminal device or another relay node. In-band relay is a relay solution in which a backhaul link and an access link share a same frequency band. Because no additional spectrum resource is used, the in-band relay has advantages such as high spectral efficiency and low deployment costs. A new radio (new radio, NR) in-band relay solution is referred to as integrated access and backhaul (integrated access and backhaul, IAB) in which the relay node is referred to as an IAB node (IAB node). The IAB node may include a mobile termination (mobile termination) (which may also be referred to as an IAB MT) and a distributed unit (distributed unit, DU) (which may also be referred to as an IAB DU). Therefore, how to enable the IAB MT and the IAB DU to work synchronously urgently needs to be implemented.

### SUMMARY

This application provides a communication method and apparatus based on integrated access and backhaul, to effectively ensure that a mobile termination (mobile termination, MT) of an IAB node and a distributed unit (distributed unit, DU) of the IAB node work synchronously.

According to a first aspect, this application provides a communication method based on integrated access and backhaul. The method includes:
An IAB node reports first information to a donor node of the IAB node, where the first information indicates a first condition, and the first condition is a condition under which a mobile termination MT of the IAB node and a distributed unit DU of the IAB node work synchronously; and under the first condition, the DU of the IAB node communicates with a lower-level node of the IAB node or a terminal device, and synchronously, the MT of the IAB node communicates with an upper-level node of the IAB node.

In this embodiment of this application, the MT of the IAB node may also be referred to as an IAB MT, and the DU of the IAB node may also be referred to as an IAB DU. The condition for the IAB MT and the IAB DU to work synchronously includes: a condition for a first carrier of the IAB MT and a first cell of the IAB MT to work synchronously. That is, under the first condition, the IAB DU provides a service for a lower-level node of the IAB node or UE in the first cell, and synchronously, the IAB MT communicates with an upper-level node of the IAB node by using the first carrier. It may be understood that for a description of synchronous working between the IAB DU and the IAB MT, refer to an implementation shown in the following. Details are not described herein.

It may be understood that synchronous working shown in this application may also be understood as simultaneous working. For example, the first condition is a condition under which the IAB MT and the IAB DU work simultaneously. For example, under the first condition, the IAB DU communicates with a lower-level node of the IAB node or the UE, and simultaneously, the IAB MT communicates with an upper-level node of the IAB node. It can be understood that this description is also applicable to other embodiments shown in this application.

In this embodiment of this application, the IAB node reports the first information, to add a limitation condition for synchronous working of the IAB node. Therefore, based on the limitation condition, the IAB node may communicate with an upper-level node or a lower-level node of the IAB node, the UE, or the like. That is, according to the technical solution provided in this application, the IAB node can ensure that the IAB MT and the IAB DU can work synchronously based on a specific limitation condition (that is, the first condition). For example, the IAB MT and the IAB DU can better implement synchronous receiving or synchronous sending.

In a possible implementation, the IAB node reports first indication information to the donor node of the IAB node. The first indication information indicates whether the first condition needs to be met when the MT of the IAB node and the DU of the IAB node work synchronously.

In the technical solutions provided in this application, the donor node may clearly learn, based on the first indication information, whether the first condition needs to be met when the IAB MT and the IAB DU work synchronously. For example, the first indication information may indicate limited (limited) shown in the following Table 2. In this case, the first indication information may indicate that the first condition needs to be met when the IAB DU and the IAB MT work synchronously. For example, the first indication information may indicate that when the IAB DU and the IAB MT work synchronously, the IAB MT needs to meet a condition of an available frequency domain resource shown in the following, and the like. Details are not described herein. For example, the first indication information may indicate supported (supported) shown in the following Table 2. In this case, the first indication information may indicate that the IAB DU and the IAB MT unconditionally support synchronous working.

In a possible implementation, the first condition includes an available frequency domain resource of the MT of the IAB node when the MT of the IAB node and the DU of the IAB node work synchronously.

According to the technical solution provided in this application, the available frequency domain resource of the IAB MT is reported. In this way, the donor node can configure a resource for the IAB MT or the IAB DU based on the available frequency domain resource. Alternatively, the available frequency domain resource of the IAB MT is reported. In this way, the donor node can learn of frequency domain resources used for communication in the IAB MT if the IAB MT and the IAB DU need to work synchronously.

In a possible implementation, the available frequency domain resource includes any one or more of the following: a start physical resource block (physical resource block, PRB) of the available frequency domain resource; an end PRB of the available frequency domain resource; an absolute radio frequency channel number (absolute radio frequency channel number, ARFCN); and a quantity of resource blocks RBs of the available frequency domain resource.

It may be understood that, for descriptions of the foregoing information, refer to Table 3 or Table 4 shown in the following. Details are not described herein again.

In a possible implementation, the first condition includes: an expected transmit power of a DU of an upper-level node when the MT of the IAB node and the DU of the IAB node work synchronously, and/or an expected transmit power of the MT of the IAB node when the MT of the IAB node and the DU of the IAB node work synchronously.

In the technical solution provided in this application, the expected transmit power of the DU of the upper-level node is reported. In this way, the donor node can determine a power parameter based on the expected transmit power of the DU of the upper-level node that is reported by the IAB node. Therefore, an uplink transmit power determined by the upper-level node based on the power parameter is, to a great extent, the expected transmit power of the DU of the upper-level node. Alternatively, a power difference between the uplink transmit power determined by the upper-level node based on the power parameter and the expected transmit power of the DU of the upper-level node is within a specific range (for example, an acceptable range). Further, it can be ensured that a power difference between a receive power when the IAB MT receives a signal from the DU of the upper-level node and a receive power when the IAB DU receives a signal from the lower-level node or the UE is within a specific range (for example, within a first value range). This improves performance loss due to an excessively large power difference between the receive power of the IAB MT and the receive power of the IAB DU.

According to the technical solution provided in this application, the expected transmit power of the IAB MT is reported. In this way, the donor node can determine the power parameter based on the expected transmit power of the IAB MT. Therefore, the uplink transmit power of the IAB MT that is determined by the IAB node based on the power parameter may be the same as the expected transmit power of the IAB MT, or a power difference between the uplink transmit power of the IAB MT and the expected transmit power of the IAB MT is within a specific range. Further, a power difference between the uplink transmit power when the IAB MT sends a signal to the upper-level node of the IAB node and the transmit power when the IAB DU sends a signal to the lower-level node of the IAB node or the UE may be ensured to be within a specific range as far as possible. This improves severe interference due to an excessively large transmit power difference between the IAB MT and the IAB DU, and effectively reduces interference between the IAB MT and the IAB DU.

In a possible implementation, the first condition includes any one or more of the following:
a quantity of ports of the MT of the IAB node when the MT of the IAB node and the DU of the IAB node work synchronously, where the quantity of ports is a quantity of ports of a demodulation reference signal DMRS used for data transmission and/or data demodulation; a quantity of ports of the DU of the IAB node when the MT of the IAB node and the DU of the IAB node work synchronously, where the quantity of ports is a quantity of ports of a demodulation reference signal DMRS used for data transmission and/or data demodulation; and a quantity of layers of the IAB node when the MT of the IAB node and the DU of the IAB node work synchronously.

In a possible implementation, the first information includes indication information that indicates a reference subcarrier spacing (sub-carrier spacing, SCS), and the reference SCS is used for determining a bandwidth length of the available frequency domain resource.

In this embodiment of this application, the reference SCS may be an SCS of a serving cell of the IAB MT.

In a possible implementation, the method further includes: The IAB node sends second information to the upper-level node of the IAB node. The second information indicates a first frequency domain resource, and the first frequency domain resource is included in the available frequency domain resource of the MT of the IAB node.

In a possible implementation, the second information includes second indication information, and the second indication information indicates a start resource block RB of the first frequency domain resource and a quantity of RBs of the first frequency domain resource.

In a possible implementation, the second indication information is an index value, and the index value indicates the start RB of the first frequency domain resource and the quantity of RBs of the first frequency domain resource.

In this embodiment of this application, for descriptions of the index value, refer to the following descriptions of Table 5, Table 6, or the like.

In a possible implementation, the second information includes third indication information, the third indication information includes N bits, each of the first N-1 bits of the N bits indicates whether a preset quantity of physical resource blocks PRBs are available, the last bit of the N bits indicates whether the remaining quantity of PRBs are available, the remaining quantity is determined based on a quantity of PRBs included in the first frequency domain resource and a quantity of PRBs corresponding to the N-1 bits, and n is an integer greater than 0.

In a possible implementation, the second information further includes fourth indication information, the fourth indication information indicates an operation mode of the IAB node, and the operation mode of the IAB node includes any one of the following:
The DU of the IAB node receives a signal from the lower-level node of the IAB node or the terminal device, and synchronously, the MT of the IAB node receives a signal from the upper-level node of the IAB node; the DU of the IAB node sends a signal to the lower-level node of the IAB node or the terminal device, and synchronously, the MT of the IAB node sends a signal to the upper-level node of the IAB node; the DU of the IAB node sends a signal to the lower-level node of the IAB node or the terminal device, and synchronously, the MT of the IAB node receives a signal from the upper-level node of the IAB node; and the DU of the IAB node receives a signal from the lower-level node of the IAB node or the terminal device, and synchronously, the MT of the IAB node sends a signal to the upper-level node of the IAB node.

It may be understood that the operation mode shown herein is merely an example. For descriptions of another operation mode, refer to the following embodiments.

In a possible implementation, the second information is included in medium access control-control element (medium access control-control element, MAC-CE) signaling.

According to a second aspect, this application provides a communication apparatus, configured to perform the method according to any one of the first aspect or the possible implementations of the first aspect. For example, the communication apparatus includes units configured to perform the method according to any one of the first aspect or the possible implementations of the first aspect. For example, the communication apparatus includes a processing unit and a transceiver unit. For specific descriptions of the processing unit and the transceiver unit, refer to the following embodiments. Details are not described herein.

According to a third aspect, this application provides a communication apparatus. The communication apparatus includes a processor, configured to perform the method according to any one of the first aspect or the possible implementations of the first aspect. Alternatively, the processor is configured to execute computer-executable instructions stored in a memory, so that the method according to any one of the first aspect or the possible implementations of the first aspect is performed.

In a process of performing the foregoing method, a process of sending information (for example, reporting the first information or the second information) or receiving information (for example, receiving information sent by the donor node) in the foregoing method may be understood as a process of outputting the foregoing information by the processor or a process of receiving the foregoing input information by the processor. When outputting the information, the processor outputs the information to a transceiver, so that the transceiver transmits the information. After the information is output by the processor, other processing may further need to be performed on the information before the information arrives at the transceiver. Similarly, when the processor receives the foregoing input information, the transceiver receives the foregoing information, and inputs the foregoing information into the processor. Further, after the transceiver receives the foregoing information, other processing may need to be performed on the foregoing information before the information is input into the processor.

Based on the foregoing principle, for example, reporting the first information mentioned in the foregoing method may be understood as outputting the first information by the processor.

For operations such as transmission, sending, and receiving related to the processor, unless otherwise specified, or if the operations do not contradict an actual function or internal logic of the processor in related descriptions, the operations may be more generally understood as operations such as outputting and inputting of the processor, instead of operations such as transmission, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, such as a read-only memory (read only memory, ROM). The memory and the processor may be integrated into one chip, or may be separately disposed in different chips. A type of the memory and a manner in which the memory and the processor are disposed are not limited in this embodiment of this application.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive a signal and/or send a signal.

According to a fourth aspect, this application provides a communication apparatus. The communication apparatus includes a logic circuit and an interface, the logic circuit is coupled to the interface, and the interface is configured to output first information. The logic circuit is configured to: under the first condition, communicate with a lower-level node of the communication apparatus or a terminal device, and synchronously, communicate with an upper-level node of the communication apparatus.

It may be understood that the logic circuit shown herein is configured to: under the first condition, communicate with the lower-level node of the communication apparatus or the terminal device, and synchronously, communicate with the upper-level node of the communication apparatus. It may be further understood that the logic circuit communicates with the lower-level node of the communication apparatus or the terminal device under the first condition through an interface, and synchronously communicates with the upper-level node of the communication apparatus.

In a possible implementation, the interface is configured to output first indication information.

In a possible implementation, the interface is further configured to output second information.

It may be understood that for descriptions of the first information, the first condition, the second information, or the like, refer to the descriptions in the first aspect. Details are not described herein again.

According to a fifth aspect, this application provides a computer-readable storage medium. The computer-readable storage medium is configured to store a computer program, and when the computer program runs on a computer, the method according to any one of the first aspect and the possible implementations of the first aspect is performed.

According to a sixth aspect, this application provides a computer program product. The computer program product includes a computer program or computer code, and when the computer program product runs on a computer, the method according to any one of the first aspect and the possible implementations of the first aspect is performed.

According to a seventh aspect, this application provides a computer program. When the computer program runs on a computer, the method according to any one of the first aspect and the possible implementations of the first aspect is performed.

### BRIEF DESCRIPTION OF DRAWINGS

FIG. 1 is a schematic diagram of a structure of an IAB node according to an embodiment of this application;
FIG. 2a to FIG. 2c each are a schematic diagram of a network architecture of a communication system according to an embodiment of this application;
FIG. 3 is a schematic diagram of a scenario of IAB spatial division receiving according to an embodiment of this application;
FIG. 4a and FIG. 4b each are a schematic diagram of frequency division multiplexing of an IAB node according to an embodiment of this application;
FIG. 5 is a schematic diagram of frequency domain resources of an IAB MT and an IAB DU according to an embodiment of this application;
FIG. 6 and FIG. 7 each are a schematic flowchart of a communication method based on IAB according to an embodiment of this application;
FIG. 8a is a schematic flowchart of reporting multiplexing capability information by an IAB node according to an embodiment of this application;
FIG. 8b is a schematic flowchart of reporting first information by an IAB node according to an embodiment of this application;
FIG. 9 is a schematic diagram of bits of second information according to an embodiment of this application; and
FIG. 10 to FIG. 12 each are a schematic diagram of a structure of a communication apparatus according to an embodiment of this application.

### DESCRIPTION OF EMBODIMENTS

To make the objectives, technical solutions, and advantages of this application clearer, the following further describes this application in detail with reference to the accompanying drawings. In the specification, claims, and the accompanying drawings of this application, terms such as "first" and "second" are only intended to distinguish between different objects but do not describe a particular order. In addition, terms "include", "have", or any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

An "embodiment" mentioned in this specification means that a particular feature, structure, or characteristic described with reference to this embodiment may be included in at least one embodiment of this application. The phrase appearing at various locations in the specification does not necessarily refer to a same embodiment, and is not an independent or alternative embodiment mutually exclusive with another embodiment. It is explicitly and implicitly understood by a person skilled in the art that embodiments described in the specification may be combined with another embodiment.

In this application, "at least one (item)" means one or more, "a plurality of" means two or more, "at least two (item)" means two or three or more, and "and/or" is used to describe an association relationship between associated objects and indicates that three relationships may exist. For example, "A and/or B" may indicate the following three cases: Only A exists, only B exists, and both A and B exist. The character "/" generally indicates an "or" relationship between the associated objects. "At least one of the following items (pieces)" or a similar expression thereof means any combination of these items. For example, at least one item (piece) of a, b, and c may represent a, b, c, "a and b", "a and c", "b and c", or "a, b, and c".

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, an internet of things (internet of things, IoT) system, a narrowband internet of things (narrow band-internet of things, NB-IoT) system, wireless fidelity (wireless fidelity, Wi-Fi), a 5th generation (5th generation, 5G) communication system, a new radio (new radio, NR), and another future communication system.

The technical solutions provided in this application may be further applied to machine type communication (machine type communication, MTC), a long term evolution-machine (long term evolution-machine, LTE-M) type communication technology, a device-to-device (device-to-device, D2D) network, a machine to machine (machine to machine, M2M) network, an internet of things (internet of things, IoT) network, or another network. The IoT network may include, for example, an internet of vehicles. Communication modes in an internet of vehicles system are collectively referred to as vehicle-to-everything (vehicle-to-everything, V2X, where X may represent anything). For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication. For example, in the communication system shown in the following, a terminal device may communicate with another terminal device by using a D2D technology, an M2M technology, a V2X technology, or the like.

The following describes terms in this application in detail.

### 1. Terminal device

The terminal device in this application is an apparatus having a wireless transceiver function. The terminal device may communicate with an access network device (or may be referred to as an access device, a network device, or the like) in a radio access network (radio access network, RAN). The terminal device may also be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, and includes an indoor device, an outdoor device, a handheld device, or a vehicle-mounted device; or may be deployed on a water surface (for example, on a ship); or may be deployed in the air (for example, on an airplane, a balloon, or a satellite). In a possible implementation, the terminal device may be a handheld device, a vehicle-mounted device, a wearable device, a sensor, a terminal in the internet of things, a terminal in the internet of vehicles, a terminal device of any form in a 5th generation (5th generation, 5G) network and a future network, or the like that has a wireless communication function. This is not limited in this application.

It may be understood that the terminal device shown in this application may include a vehicle (for example, an entire vehicle) in the internet of vehicles, and also a vehicle-mounted device, a vehicle-mounted terminal, or the like in the internet of vehicles. A specific form of the terminal device applied to the internet of vehicles is not limited in this application.

For ease of description, the terminal device is referred to as LTE below.

### 2. Network device

The network device in this application may be an apparatus that is deployed in a radio access network to provide a wireless communication service for a terminal device. The network device may also be referred to as an access device, a RAN device, an access network device, or the like. The network device may include but is not limited to: a next generation base station (next generation NodeB, gNB) in a 5G system, an evolved NodeB (evolved NodeB, eNB) in an LTE system, a radio network controller (radio network controller, RNC), a node B (node B, NB), a base station controller (base station controller, BSC), a base transceiver station (base transceiver station, BTS), a home base station (home evolved NodeB, or home NodeB, HNB), a baseband unit (base band unit, BBU), a transmission reception point (transmitting and receiving point, TRP), a transmission point (transmitting point, TP), a small cell base station (pico), a mobile switching center, or a network device in a future network. For example, the network device may alternatively be a radio controller in a cloud radio access network (cloud radio access network, CRAN) scenario. Alternatively, the network device may be a wearable device, a vehicle-mounted device, or the like. Alternatively, the network device may be a device that bears a base station function in D2D, V2X, or M2M, or the like. A specific type of the network device is not limited in this application. In systems using different radio access technologies, names of devices having functions of the network device may be different.

Optionally, in some deployments of the network device, the network device may include a central unit (central unit, CU), a distributed unit (distributed unit, DU), and the like. In some other deployments of the network device, the CU may be further divided into a CU-control plane (control plane, CP), a CU-user plane (user plan, UP), and the like. In some other deployments of the network device, the network device may alternatively be an open radio access network (open radio access network, ORAN) architecture or the like. A specific deployment manner of the network device is not limited in this application.

It may be understood that the network device shown above may also be referred to as a donor base station (donor base station), or may be referred to as a donor node, an IAB donor node, or the like. A name of the network device in the IAB system is not limited in this embodiment of this application.

For ease of description, the network device is referred to as a donor node below.

### 3. IAB node

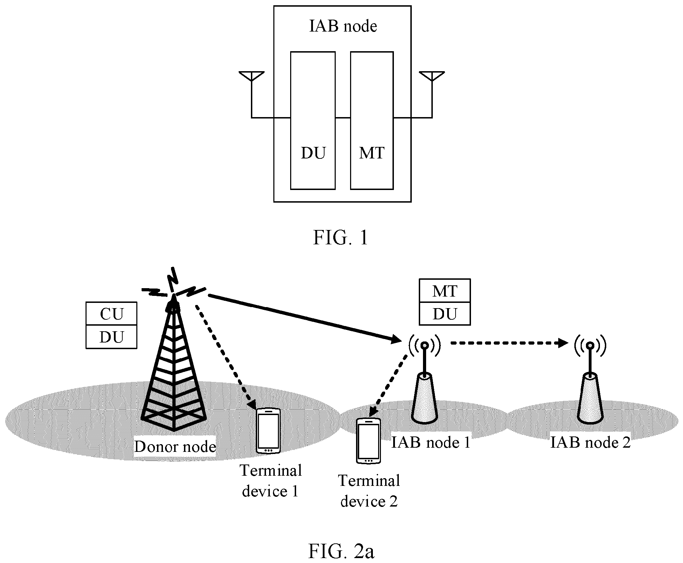

The IAB node may include a mobile termination (mobile termination) (which may also be referred to as an IAB MT) and a distributed unit (distributed unit, DU) (which may also be referred to as an IAB DU), as shown in FIG. 1. The MT may be understood as a component similar to a terminal device (such as UE) in the IAB node, and the MT may also be referred to as a function camping on the IAB node. Because a function of the MT is similar to a function of common UE, it may be understood that the IAB node accesses an upper-level node (or referred to as a parent node) or an upper-level network by using the MT. A function of the DU is described relative to a function of a central unit (central unit, CU) in a network device. For example, the DU may be understood as a base station function module of the IAB node. That is, the IAB node may communicate with a lower-level node (or referred to as a child node) or UE by using the DU. Both the MT and the DU of the IAB node may have complete transceiver modules, and there is an interface between the MT and the DU. It may be understood that the MT and the DU are logical modules. In actual application, the MT and the DU may share some submodules, for example, share a transceiver antenna and a baseband processing module. For example, the upper-level node may be a base station, another IAB node, or the like, and the lower-level node may be another IAB node or the like.

Based on the devices described above, an embodiment of this application provides a communication system. FIG. 2a is a schematic diagram of a network architecture of a communication system according to an embodiment of this application. For example, an IAB node may provide wireless access and wireless backhaul of an access service for a terminal device. A donor node may provide a wireless backhaul function for the IAB node, and provide an interface between the terminal device and a core network. That is, the IAB node may be connected to the donor node through a wireless backhaul link, so that the terminal device served by the IAB node is connected to the core network.

As shown in FIG. 2a, for example, the donor node may include a CU and a DU. From a perspective of a protocol stack, the CU includes a radio resource control (radio resource control, RRC) layer and a packet data convergence protocol (packet data convergence protocol, PDCP) layer of an original LTE base station, and the DU includes a radio link control (radio link control, RLC) layer, a medium access control (media access control, MAC) sublayer, and a physical layer (physical layer, PHY). For example, the CU and the DU may be physically connected through an optical fiber, and logically, there is a specially defined F1 interface used for communication between the CU and the DU. From a perspective of a function, the CU is mainly responsible for radio resource control and configuration, cross-cell mobility management, bearer management, and the like. The DU is mainly responsible for scheduling, physical signal generation and sending, and the like. As shown in FIG. 2a, for example, the donor node sends configuration information to a DU of an IAB node 1 by using a CU. An F1 interface application protocol (F1 application, F1-AP) data packet generated by the CU of the donor node is encapsulated into an IP packet, and is transferred between air interface multi-hop nodes. After the F1-AP data packet arrives at the IAB node 1, the F1-AP data packet is processed at an adaptation layer of the IAB MT, and then the F1-AP data packet is forwarded to the local IAB DU for processing. Finally, the F1-AP data packet is parsed at the IAB DU.

Based on FIG. 2a, the IAB node 1 may communicate with the donor node by using the MT, and communicate with an IAB node 2 by using the DU. In addition, the IAB node 1 may further communicate with a terminal device 2 by using the DU. The donor node may provide a service for the IAB node 1, and also provide a service for a terminal device 1. It may be understood that, in the network architecture shown in FIG. 2a, a lower-level node of the IAB node 1 may be the terminal device 2, or may be the IAB node 2.

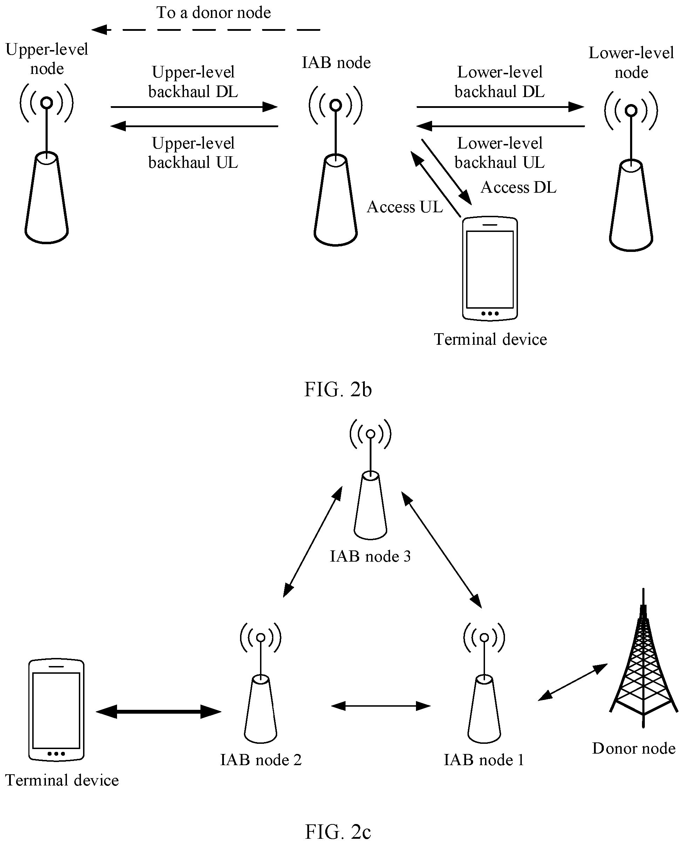

It may be understood that a link through which the MT communicates with an upper-level node (the donor node shown in FIG. 2a) is referred to as an upper-level backhaul link (parent backhaul link), a link through which the DU communicates with a lower-level IAB node (the IAB node 2 shown in FIG. 2a) is referred to as a lower-level backhaul link (child backhaul link), and a link through which the DU communicates with a subordinate terminal device (the terminal device 2 shown in FIG. 2a) of the DU is referred to as an access link. The IAB node can be connected to the donor node through a multi-level upper-level node. In some embodiments, the lower-level backhaul link may also be referred to as an access link or the like. A name of the lower-level backhaul link is not limited in this embodiment of this application. For example, as shown in FIG. 2b, the upper-level backhaul link includes an upper-level backhaul uplink (uplink, UL) and an upper-level backhaul downlink (downlink, DL), the lower-level backhaul link includes a lower-level backhaul UL and a lower-level backhaul DL, and the access link includes an access UL and an access DL.

It should be noted that in the diagram of the network architecture shown in FIG. 2a, although the terminal device, the IAB node, and the donor node are shown, the network architecture may not be limited to the terminal device, the IAB node, and the donor node. For example, the network architecture may further include a core network device, a device configured to bear a virtualized network function, or the like. Details are not described herein. In addition, quantities of terminal devices, IAB nodes, and donor nodes included in the network architecture are not limited in this application.

For example, FIG. 2c is a schematic diagram of another network architecture according to an embodiment of this application. As shown in FIG. 2c, the network architecture includes one terminal device, a plurality of IAB nodes (for example, an IAB node 1, an IAB node 2, and an IAB node 3 in FIG. 2c), and one donor node. The terminal device may access the donor node through two paths. One path successively passes through the terminal device, the IAB node 2, the IAB node 1, and the donor node. The other path successively passes through the terminal device, the IAB node 2, the IAB node 3, the IAB node 1, and the donor node. That the terminal device accesses the donor node through a plurality of paths may be understood as a multi-connectivity wireless backhaul scenario. This can ensure service transmission reliability.

It may be understood that the network architectures shown in FIG. 2a and FIG. 2c are merely examples. A specific form or a specific networking scenario in the network architecture is not limited in this application.

### 4. Spatial division multiplexing (spatial duplex multiplexing, SDM)

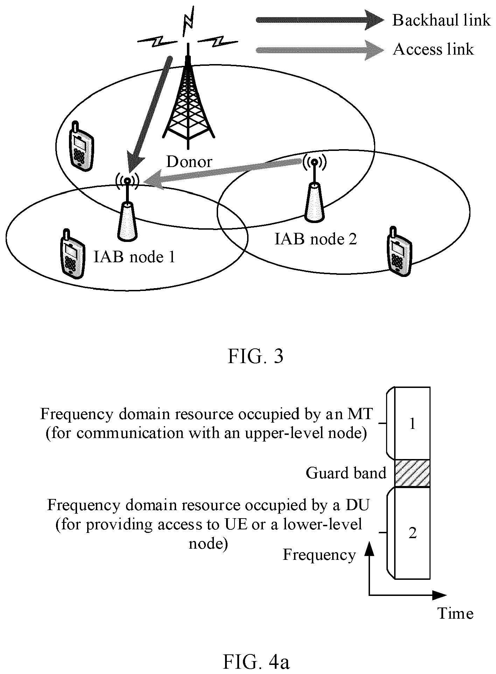

For example, a spatial division multiplexing scenario may be shown in FIG. 3. An IAB node 1 synchronously (or may be understood as simultaneously) receives a downlink signal sent by an upper-level node on a backhaul link and an uplink signal sent by a lower-level node (for example, an IAB node 2 or a terminal device) on an access link. It may be understood that FIG. 3 shows a spatial division receiving scenario of an IAB node. For example, the IAB node may further synchronously (or may be understood as simultaneously) send a signal to an upper-level node, and send a signal to a lower-level node, that is, a spatial division sending scenario of the IAB node.

### 5. Frequency division multiplexing

In IAB, frequency division multiplexing mainly refers to frequency division multiplexing between an IAB MT and an IAB DU. That is, the IAB MT and the IAB DU may implement frequency division multiplexing by using resources in different frequency domains. Frequency division multiplexing between the IAB MT and the IAB DU can effectively improve a mutual influence (for example, reduce the mutual influence) of signals transmitted and received between the IAB MT and the IAB DU.

For example, FIG. 4a is a schematic diagram of frequency division multiplexing between an IAB MT and an IAB DU according to an embodiment of this application. As shown in FIG. 4a, on a same time domain resource, the IAB MT and the IAB DU may use different frequency domain resources. For example, the IAB MT communicates with an upper-level node of the IAB node by using a frequency domain resource 1 (that is, 1 shown in FIG. 4a), and the IAB DU communicates with a lower-level node of the IAB node or UE by using a frequency domain resource 2 (that is, 2 shown in FIG. 4a). That is, the IAB DU may provide an access service for the lower-level node of the IAB node or the UE by using the frequency domain resource 2. For example, when the IAB MT receives, by using the frequency domain resource 1, downlink data sent by the upper-level node, and simultaneously, the IAB DU sends the downlink data to the lower-level node of the IAB node or the UE by using the frequency domain resource 2, the scenario is downlink full duplex. For example, when the IAB MT sends uplink data to the upper-level node by using the frequency domain resource 1, and simultaneously, the IAB DU receives, by using the frequency domain resource 2, the uplink data sent by the lower-level node of the IAB node or the UE, the scenario is uplink full duplex.

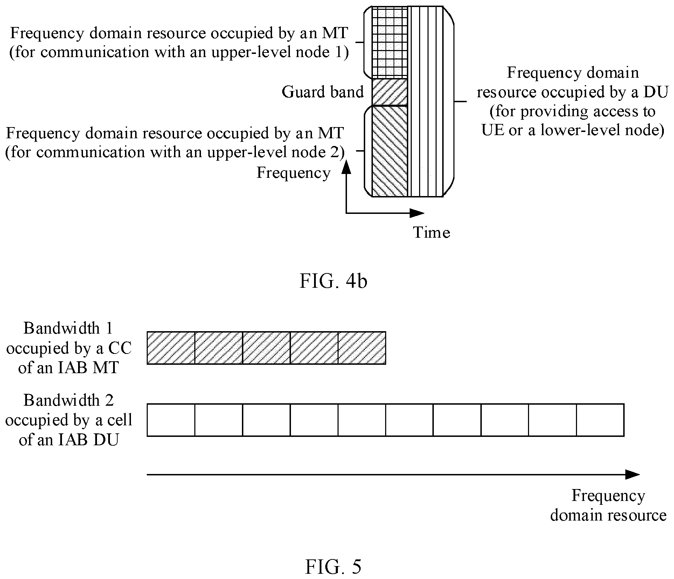

For example, FIG. 4b is a schematic diagram of frequency division multiplexing in a multi-connectivity wireless backhaul scenario according to an embodiment of this application. For example, when an IAB node has a plurality of upper-level nodes, an MT of the IAB node may communicate with each other by using different upper-level nodes of different frequency domain resources. FIG. 4b shows only two upper-level nodes of the IAB node as an example. For example, the IAB MT may separately communicate with an upper-level node 1 and an upper-level node 2 by using different frequency domain resources. In addition, time division multiplexing is performed between the IAB MT and the IAB DU, that is, the IAB MT and the IAB DU may transmit signals on different OFDM symbols.

It may be understood that, for descriptions of the guard bands shown in FIG. 4a and FIG. 4b, refer to a related standard, protocol, or the like. Details are not described in this application.

### 6. Synchronous working, also referred to simultaneous (simultaneous) working

Synchronous working shown in this application mainly refers to synchronous working between an IAB MT and an IAB DU.

For example, synchronous working may include:
The IAB DU receives a signal from a lower-level node of an IAB node or UE, and synchronously, the IAB MT receives a signal from an upper-level node of the IAB node (that is, the IAB DU and the IAB MT support synchronous receiving, which is denoted as DU_RX/MT_RX). Alternatively, the IAB DU sends a signal to a lower-level node of an IAB node or UE, and synchronously, the IAB MT sends a signal to an upper-level node of the IAB node (that is, the IAB DU and the IAB MT support synchronous sending, which is denoted as DU_TX/MT_TX). Alternatively, the IAB DU sends a signal to a lower-level node of an IAB node or UE, and synchronously, the IAB MT receives a signal from an upper-level node of the IAB node (that is, the synchronous IAB MT that the IAB DU supports sending supports receiving, which is denoted as DU_TX/MT_RX). Alternatively, the IAB DU receives a signal from a lower-level node of an IAB node or UE, and synchronously, the IAB MT sends a signal to an upper-level node of the IAB node (that is, the synchronous IAB MT that the IAB DU supports receiving supports sending, which is denoted as DU_RX/MT_TX).

For example, that the IAB MT and the IAB DU work synchronously includes: a first carrier (carrier, CC) of the IAB MT and a first cell (cell) of the IAB DU work synchronously. For example, the IAB DU provides a service for a lower-level node of the IAB node or UE in the first cell (which may also be referred to as that the IAB DU provides an access service for the lower-level node of the IAB node or the UE in the first cell), and synchronously, the IAB MT communicates with the upper-level node of the IAB node by using the first carrier.

For example, synchronous working may include:
The IAB DU receives a signal from the lower-level node of the IAB node or the UE in the first cell, and synchronously, the IAB MT receives a signal from the upper-level node of the IAB node by using the first carrier (for example, which may be referred as that the first cell of the IAB DU and the first carrier of the IAB MT support synchronous receiving for short). Alternatively, the IAB DU sends a signal to the lower-level node of the IAB node or the UE in the first cell, and synchronously, the IAB MT sends a signal to the upper-level node of the IAB node by using the first carrier (for example, which may be referred as that the first cell of the IAB DU and the first carrier of the IAB MT support synchronous sending for short). Alternatively, the IAB DU sends a signal to the lower-level node of the IAB node or the UE in the first cell, and synchronously, the IAB MT receives a signal from the upper-level node of the IAB node by using the first carrier (for example, which may be referred as that the first cell of the IAB DU supports sending, and synchronously, the first carrier of the IAB MT supports receiving for short). Alternatively, the IAB DU receives a signal from the lower-level node of the IAB node or the UE in the first cell, and synchronously, the IAB MT sends a signal to the upper-level node of the IAB node by using the first carrier (for example, which may be referred as that the first cell of the IAB DU supports receiving, and synchronously, the first carrier of the IAB MT supports sending for short).

The foregoing cases of synchronous working may also be referred to as a duplex multiplexing mode or an operation mode of the IAB. That is, the foregoing description of synchronous working is also applicable to the duplex multiplexing mode of the IAB node. For example, duplex multiplexing modes supported by the IAB node may vary depending on different implementation forms or hardware capabilities of the IAB nodes. The IAB node may report a duplex multiplexing capability of the IAB node based on different duplex multiplexing modes supported by the IAB node. The IAB node enables a donor node to configure or coordinate, by reporting multiplexing capability, resources used by the IAB node for access and backhaul, and the like.

For example, the IAB DU may report, to the donor node (donor CU), whether a cell (cell) of the IAB DU and a serving cell (which may also be understood as a carrier) of the IAB MT can synchronously perform sending or receiving, or the like. That is, the IAB DU reports multiplexing capability information to the donor node. The multiplexing capability information is shown in Table 1. The multiplexing capability information shown in Table 1 is configured for a cell of one IAB DU and a serving cell (that is, a CC) of one IAB MT. For example, a cell of the IAB DU may be identified by using a new radio (new radio, NR) cell identity (NR cell identity), and a cell of the MT may be identified by using a configured serving cell (for example, an IAB MT cell item). In Table 1, supported (supported) indicates that a corresponding multiplexing capability is supported, and not supported (not supported) indicates that a corresponding multiplexing capability is not supported. For example, DU_RX/MT-RX in Table 1 indicates whether the IAB DU and the IAB MT support synchronous receiving, and DU_TX/MT_TX indicates whether the IAB DU and the IAB MT support synchronous sending. For DU_TX/MT_RX and DU_RX/MT_TX in Table 1, refer to the foregoing description. Details are not described herein again.

**Table 1**

| | |
|---|---|
| >>DU_RX/MT_RX | Enumerated (enumerated) (supported, not supported) |
| >>DU_TX/MT_TX | Enumerated (enumerated) (supported, not supported) |
| >>DU_TX/MT_RX | Enumerated (enumerated) (supported, not supported) |
| >>DU_RX/MT_TX | Enumerated (enumerated) (supported, not supported) |

It may be understood that for descriptions of synchronous working, a duplex multiplexing mode, or the like of the IAB node, refer to a related standard, protocol, or the like. Details are not described in this application again. For example, for a description of the duplex multiplexing mode, refer to the description in [TS 38.473].

It may be understood that synchronous working in this application may be replaced with simultaneous working. For example, simultaneous working includes: The IAB DU receives a signal from a lower-level node of the IAB node or UE, and simultaneously, the IAB MT receives a signal from an upper-level node of the IAB node (that is, the IAB DU and the IAB MT support simultaneous receiving, which is denoted as DU_RX/MT_RX). Alternatively, the IAB DU sends a signal to a lower-level node of the IAB node or UE, and simultaneously, the IAB MT receives a signal from an upper-level node of the IAB node (that is, the IAB DU supports sending, and simultaneously, the IAB MT supports receiving, which is denoted as DU_TX/MT_RX). It may be understood that only an example of a relationship between simultaneous working and synchronous working is described herein. Descriptions of simultaneous working and synchronous working are not described in detail in this application. Based on a relationship between synchronous working and simultaneous working, in the following description about synchronous working between the IAB DU and the IAB MT, simultaneous working between the IAB DU and the IAB MT is described in some parts. This should not be construed as a limitation on this application. For example, when the IAB MT supports receiving, and simultaneously, the IAB DU supports sending, the first condition that the IAB node needs to meet described below may be replaced with the following: The IAB MT supports receiving, and synchronously, the IAB DU supports sending. In this case, the IAB node needs to meet the first condition. For another example, when the IAB MT supports sending, and simultaneously, the IAB DU supports receiving, the first condition that the IAB node needs to meet may be replaced with the following: The IAB MT supports sending, and synchronously, the IAB DU supports receiving. In this case, the IAB node needs to meet the first condition. Similar descriptions are not described in detail herein.

It can be learned from the foregoing description of synchronous working that, synchronous working between the IAB MT and the IAB DU may be understood as synchronous working between the first carrier (which may also be understood as a carrier) of the IAB MT and the first cell (which may also be understood as a cell) of the IAB DU. A bandwidth occupied by the first carrier of the IAB MT and a bandwidth occupied by the first cell of the IAB DU may be separately shown in FIG. 5. For example, in a scenario in which the first carrier of the IAB MT and the first cell of the IAB DU work synchronously, when the first carrier of the IAB MT occupies a bandwidth 1, and communicates with an upper-level node of the IAB node by using the bandwidth 1, the IAB MT and the IAB DU cannot meet a condition for synchronous working. As a result, a bandwidth 2 occupied by the first cell of the IAB DU cannot be used at the foregoing moment (that is, a moment when the IAB MT communicates with an upper-level node of the IAB node by using the bandwidth 1). It may be understood that the first carrier and the first cell shown in this application are merely examples.

In other words, when any one of the IAB MT and the IAB DU performs transmission by using the bandwidth shown in FIG. 5 (for example, the IAB MT transmits a signal by using the bandwidth 1, and the IAB DU transmits a signal by using the bandwidth 2), for example, the IAB MT in FIG. 5 occupies a part of bandwidth resources, the entire bandwidth resources of the IAB DU are unavailable at a current transmission occasion. Consequently, spectrum resources are wasted, and spectrum efficiency of a network is affected.

In view of this, this application provides a communication method and apparatus based on IAB, to effectively reduce a waste of spectrum resources and help improve spectrum efficiency of a network.

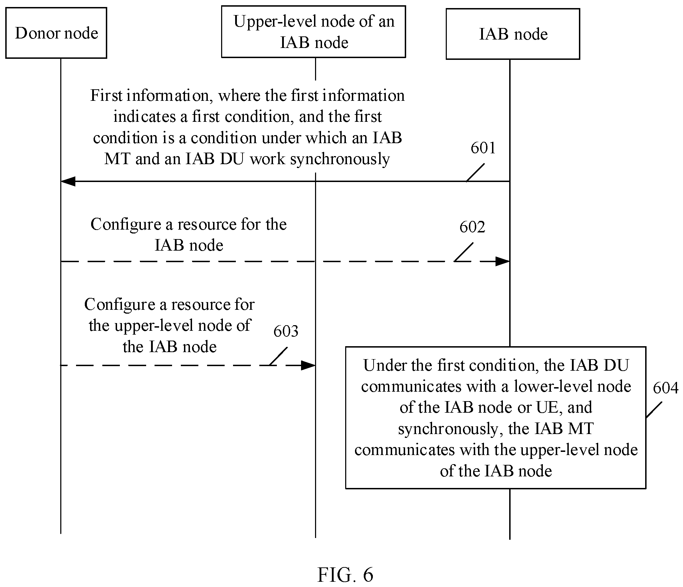

FIG. 6 is a schematic flowchart of a communication method based on IAB according to an embodiment of this application. For descriptions of a communication system and a communication apparatus to which the method is applicable, refer to the foregoing description. Details are not described herein again. As shown in FIG. 6, the method includes the following steps.

601: An IAB node reports first information to a donor node of the IAB node, where the first information indicates a first condition, and the first condition is a condition under which an IAB MT and an IAB DU work synchronously.

Correspondingly, the donor node of the IAB node receives the first information.

It may be understood that, in this embodiment of this application, the IAB MT is an MT of the IAB node, and the IAB DU is a DU of the IAB node. The condition for the IAB MT and the IAB DU to work synchronously includes: a condition for a first carrier of the IAB MT and a first cell of the IAB MT to work synchronously. In other words, under the first condition, the IAB DU provides a service for a lower-level node of the IAB node or LTE in the first cell, and synchronously, the IAB MT communicates with an upper-level node of the IAB node by using the first carrier. For brevity, the following describes the method provided in embodiments of this application by using an example in which the IAB MT and the IAB DU work synchronously.

For example, that the IAB node reports the first information to the donor node (donor node) of the IAB node includes: The IAB DU reports the first information to the donor node of the IAB node; or the IAB DU reports the first information to the donor node of the IAB node by using F1-AP signaling (that is, the first information may be included in F1-AP signaling). The IAB node reports the first information to the donor node of the IAB node, and the donor node may configure or coordinate, based on the first information, resources used by the IAB node for access and backhaul, and the like.

In a possible implementation, for a description of synchronous working between the IAB MT and the IAB DU, refer to the foregoing description. For example, that the IAB MT and the IAB DU work synchronously indicates that the IAB MT receives a signal from an upper-level node of the IAB node, and synchronously, the IAB DU receives a signal from a lower-level node of the IAB node or UE. The synchronization shown herein may not be limited to that all actions of the IAB MT and the IAB DU are performed simultaneously. For example, if it is not limited to that the IAB MT receives a signal at a time point, the IAB DU receives the signal at the time point. For example, synchronization may indicate that the IAB MT and the IAB DU receive signals synchronously in a same time period, or receive signals synchronously in a same time slot (slot), or receive signals synchronously in a same orthogonal frequency division multiplexing (orthogonal frequency division multiplexing, OFDM) symbol, or the like. Certainly, synchronization may also indicate that the IAB MT and the IAB DU receive signals simultaneously at the same time point. Herein, only an example in which the IAB MT and the IAB DU support synchronous receiving is used to describe synchronous working. For description of synchronous working, refer to the synchronous working described above. Details are not described herein again.

With reference to the first condition, the first information indicates that the first condition needs to be met when the IAB MT and the IAB DU work synchronously. In other words, the IAB node needs to report frequency division multiplexing condition information of the IAB node to the donor node. For example, when the IAB MT and the IAB DU support synchronous receiving, the IAB node needs to meet the first condition. For another example, when the IAB MT and the IAB DU support synchronous receiving, the IAB node needs to meet the first condition. For another example, when the IAB MT supports receiving, and simultaneously, the IAB DU supports sending, the IAB node needs to meet the first condition. For another example, when the IAB MT supports sending, and simultaneously, the IAB DU supports receiving, the IAB node needs to meet the first condition.

For example, when the IAB node accesses a network, or when the IAB node is connected to a new donor node, the IAB node may report multiplexing capability information to the donor node. It may be understood that, for descriptions of the multiplexing capability information, refer to synchronous working described above, Table 1, or the like. Details are not described herein again. Optionally, when the IAB node reports the multiplexing capability information, the IAB node may report the first information to the donor node, that is, the first information and the multiplexing capability information may be included in same signaling, for example, F1-AP signaling. Optionally, the multiplexing capability information and the first information that are reported by the IAB node may be not in same signaling. It may be understood that when the IAB node reports the multiplexing capability information and the first information, it may be considered (that is, implicitly indicated) by default that the first condition needs to be met when the IAB MT and the IAB DU work synchronously.

It may be understood that the foregoing implementation is shown based on the multiplexing capability information shown in Table 1. However, this embodiment of this application further provides another type of multiplexing capability information, as shown in Table 2. Supported (supported) in Table 2 indicates that the IAB MT and the IAB DU unconditionally support corresponding multiplexing transmission. For example, supported (supported) indicates that the IAB MT and the IAB DU unconditionally support synchronous receiving or synchronous sending. Not supported (not supported) indicates that the IAB MT and the IAB DU do not support corresponding multiplexing transmission. Limited (limited) indicates that under specific conditions, the IAB MT and the IAB DU support corresponding multiplexing transmission. For example, limited (limited) indicates that under the first condition, the IAB MT and the IAB DU support synchronous receiving, synchronous sending, or the like. That is, limited (limited) may explicitly indicate whether the first condition needs to be met when the IAB MT and the IAB DU work synchronously.

That is, based on Table 2, when the IAB node reports multiplexing capability information, the multiplexing capability information includes limited (limited) capability information. Therefore, that the IAB MT and the IAB DU work synchronously may be understood as any one or more of the following:
The IAB MT and the IAB DU unconditionally support synchronous receiving (for example, DU_RX/MT_RX and supported in Table 2); the IAB MT and the IAB DU unconditionally support synchronous sending (for example, DU_TX/MT_TX and supported in Table 2); when there is unconditional, the IAB MT supports receiving, and simultaneously, the IAB DU supports sending (for example, DU_TX/MT_RX and supported in Table 2); when there is unconditional, the IAB MT supports sending, and simultaneously, the IAB DU supports receiving (for example, DU_RX/MT_TX and supported in Table 2); under a first condition, the IAB MT and the IAB DU support synchronous receiving (for example, DU_RX/MT_RX and limited in Table 2) (which may also be understood as that a first carrier of the IAB MT and a first cell of the IAB DU support synchronous receiving); under the first condition, the IAB MT and the IAB DU support synchronous sending (for example, DU TX/MT_TX and limited in Table 2) (which may also be understood as that the first carrier of the IAB MT and the first cell of the IAB DU supports simultaneous sending); under the first condition, the IAB MT supports receiving, and simultaneously, the IAB DU supports sending (for example, DU_TX/MT_RX and limited in Table 2) (which may also be understood that the first carrier of the IAB MT supports receiving, and simultaneously, the first cell of the IAB DU supports sending); and under the first condition, the IAB MT supports sending, and simultaneously, the IAB DU supports receiving (for example, DU _RX/MT_TX and limited in Table 2) (which may also be understood that the first carrier of the IAB MT supports sending, and simultaneously, the first cell of the IAB DU supports receiving).

**Table 2**

| | |
|---|---|
| >>DU_RX/MT_RX | Enumerated (enumerated) (supported, not supported, limited) |
| >>DU_TX/MT_TX | Enumerated (enumerated) (supported, not supported, limited) |
| >>DU_TX/MT_RX | Enumerated (enumerated) (supported, not supported, limited) |
| >>DU_RX/MT_TX | Enumerated (enumerated) (supported, not supported, limited) |

In this embodiment of this application, for example, in addition to reporting the first information to the donor node of the IAB node, the IAB node may further report first indication information to the donor node of the IAB node. The first indication information indicates whether the first condition needs to be met when the IAB MT and the IAB DU work synchronously. In other words, the first indication information may be understood as limited in Table 2, and the first information indicates the first condition that needs to be met by the IAB MT and the IAB DU when there is limited multiplexing capability information. It may be understood that the first information and the first indication information may be included in same signaling, or may be included in different signaling. This is not limited in this embodiment of this application.

It may be understood that the foregoing synchronous working is shown in a case in which the multiplexing capability information is supported or limited. This embodiment of this application is also applicable to a case in which the multiplexing capability information is not supported. For example, under the first condition, the IAB MT and the IAB DU do not support synchronous receiving, synchronous sending, or the like.

It may be understood that for a specific description of the first condition, refer to a specific example shown below. Details are not described herein again.

In a possible implementation, the method shown in FIG. 6 includes step 602.

602: The donor node configures a resource for the IAB node.

In this embodiment of this application, the donor node may configure a resource for the IAB MT and/or the IAB DU. For example, DU_TX/MT_TX is used as an example. After the donor node configures, based on the multiplexing capability information reported by the IAB node and the first condition, a hard-type resource (that is, a resource that is always available to the IAB DU) for the IAB DU in a slot or symbol, and a transmission direction is downlink (DL). For example, the IAB MT determines that the transmission direction is uplink based on a time division duplex (time division duplex, TDD) configuration. When the IAB MT is scheduled to transmit an uplink signal at the resource location, and synchronously, the IAB DU also transmits a downlink signal, the IAB MT and the IAB DU can work synchronously.

In a possible implementation, the method shown in FIG. 6 includes step 603.

603: The donor node configures a resource for the upper-level node of the IAB node.

In this embodiment of this application, the donor node may configure a resource for a DU of the upper-level node of the IAB node. It may be understood that, for specific descriptions of configuring a resource for the IAB node or configuring a resource for the DU of the upper-level node of the IAB node by the donor node, refer to a related standard, protocol, or the like. Details are not described herein again.

Optionally, the method shown in FIG. 6 may include step 601, step 602, and step 604. In this case, the upper-level node of the IAB node may be a donor node or the like. A specific network architecture in this case is not limited in this embodiment of this application. Optionally, the method shown in FIG. 6 may include step 601 to step 604. In this case, the upper-level node of the IAB node may be another IAB node, and an upper-level node of the another IAB node is a donor node, as shown in a network architecture in FIG. 2a. A specific network architecture in this case is not limited in this embodiment of this application. It can be understood that a sequence of step 602 and step 603 is not limited in this embodiment of this application.

604: Under the first condition, the IAB DU communicates with a lower-level node of the IAB node or the UE, and synchronously, the IAB MT communicates with an upper-level node of the IAB node.

In this embodiment of this application, the IAB DU communicates with the lower-level node of the IAB node or the LTE. Synchronously, the IAB MT communicates with the upper-level node of the IAB node. This means that the IAB DU communicates with the lower-level node of the IAB node or the UE based on the multiplexing capability information of the IAB node, and simultaneously, the IAB MT communicates with the upper-level node of the IAB node.

For example, the multiplexing capability information is that synchronous receiving is supported, and the IAB node needs to meet the first condition. The IAB DU receives a signal from the lower-level node of the IAB node or the UE, and simultaneously, the IAB MT receives a signal from the upper-level node of the IAB node. It may be understood that for descriptions of the multiplexing capability information, refer to the foregoing descriptions. Details are not described herein again. In this embodiment of this application, the IAB node reports the first information, that is, adds a limitation condition for supporting multiplexing based on the multiplexing capability information. Therefore, based on the limitation condition, the IAB node may communicate with the upper-level node or the lower-level node of the IAB node, the UE, or the like. In addition, the IAB node can ensure that the IAB MT and the IAB DU can work synchronously based on the limitation condition. For example, the IAB MT and the IAB DU can better implement synchronous receiving or synchronous sending.

The following specifically describes the first condition shown in this embodiment of this application.

### Implementation 1

The first condition includes an available (available) frequency domain resource of the IAB MT when the IAB MT and the IAB DU work synchronously. Alternatively, the first condition includes an unavailable frequency domain resource of the IAB MT when the IAB MT and the IAB DU work synchronously.

In this embodiment of this application, the IAB MT and the IAB DU may be in a frequency division multiplexing mode when the IAB MT and the IAB DU work synchronously. Therefore, that frequency domain resources of the IAB MT and the IAB DU do not overlap is required. As shown in FIG. 5, if frequency domain resources of the IAB MT and the IAB DU overlap, or an occupied frequency domain resource is less than a guard band, either of the IAB MT or the IAB DU cannot work. Therefore, the available frequency domain resource of the IAB MT is reported. In this way, the donor node can configure a resource for the IAB MT or the IAB DU based on the available frequency domain resource. Alternatively, the available frequency domain resource of the IAB MT is reported. In this way, the donor node can learn of frequency domain resources used for communication in the IAB MT if the IAB MT and the IAB DU need to work synchronously. It may be understood that the available frequency domain resource may also include a bandwidth resource available for the IAB MT. That is, the available frequency domain resource may include an available bandwidth resource.

For example, the available frequency domain resource includes any one or more of the following:
a start physical resource block (physical resource block, PRB) of the available frequency domain resource;
an end PRB of the available frequency domain resource;
an absolute radio frequency channel number (absolute radio frequency channel number, ARFCN); and
a quantity of resource blocks (resource block, RB) of the available frequency domain resource.

In some implementations, the available frequency domain resource includes a start PRB. In this case, the end PRB of the available frequency domain resource may be the last PRB in the bandwidth resource by default. The bandwidth resource may be a frequency domain resource on which the first carrier of the IAB MT is located. Alternatively, the bandwidth resource may be a frequency domain resource of a serving cell (for example, the first carrier) of the IAB MT.

In some other implementations, the available frequency domain resource includes an end PRB. In this case, the start PRB of the available frequency domain resource may be a PRB 0. Generally, in ascending order, a first frequency domain resource of the serving cell or a bandwidth part (bandwidth part, BWP) is usually a PRB 0. Therefore, when the end PRB is indicated by using the first information, the start PRB of the available frequency domain resource may be the PRB 0 by default.

In still other implementations, the available frequency domain resource includes an ARFCN. The ARFCN may indicate a start frequency of the available frequency domain resource.

In still other implementations, the available frequency domain resource includes a quantity of RBs (which may also be understood as a frequency domain length of the available frequency domain resource). In this case, a start location of the available frequency domain resource may be a PRB 0 or the like. How to set the start location is not limited in this embodiment of this application. It may be understood that the frequency domain length of the available frequency domain resource measured in a unit of an RB herein is merely an example. For example, the frequency domain length of the available frequency domain resource may be further measured in a unit of a PRB or a resource element (resource element, RE). For example, the available frequency domain resource includes a quantity of PRBs, a quantity of REs, or the like. This is not limited in this embodiment of this application.

In still other implementations, the available frequency domain resource is indicated by using a common resource block (common resource block, CRB).

In still other implementations, the available frequency domain resource includes a start location (which may also be referred to as a starting location or the like) and an end location (which may also be referred to as an ending location or the like) of the available frequency domain resource. In other words, the start location and the end location may indicate a condition that the frequency domain resource of the IAB MT needs to meet when the IAB MT and the IAB DU work synchronously. For example, the start position and the end position of the available frequency domain resource may be measured by using any one of the following units: a PRB, an RB, an RE, or the like. For example, as shown in Table 3, a semi-persistent frequency division multiplexing resource may be divided by using a start PRB and an end PRB.

**Table 3**

| Operation mode (operation mode) | Frequency domain resource configuration (frequency resource allocation) |
|---|---|
| >>DU_RX/MT_RX | IAB MT frequency domain configuration (IAB MT frequency allocation) |
| | {Start PRB (Start PRB) X1 |
| | End PRB (End PRB) X2} |
| >>DU_TX/MT_TX | IAB MT frequency allocation |
| | {Start PRB X3} |

For example, a second row in Table 3 may indicate that the IAB DU and the IAB MT support synchronous receiving, and a start PRB of the available frequency domain resource of the IAB MT is X1, and an end PRB is X2. A third row in Table 3 may indicate that the IAB DU and the IAB MT support synchronous sending, and a start PRB of the available frequency domain resource of the IAB MT is X3. In this case, the end PRB of the available frequency domain resource of the IAB MT is the last PRB in the bandwidth resource. It may be understood that X1, X2, and X3 shown herein are merely examples, and specific values represented by X1, X2, and X3 are not limited in this embodiment of this application. It may be understood that the operation mode (operation mode) shown in Table 3 may be understood as a duplex multiplexing mode of the IAB node, that is, multiplexing capability information of the IAB node. Table 3 is shown by using the multiplexing capability information and the first information reported by the IAB node as an example. When no operation mode for frequency domain resource allocation is explicitly configured, it is considered that the IAB node does not perform frequency division multiplexing. For example, the IAB node may perform time division multiplexing.

In still other implementations, the available frequency domain resource includes an ARFCN and a quantity of RBs. As shown in Table 4, a start frequency and a quantity of RBs are indicated by using an ARFCN, to perform semi-persistent frequency division multiplexing resource division.

**Table 4**

| Operation mode (operation mode) | Frequency domain resource configuration (frequency resource allocation) |
|---|---|
| >>DU_RX/MT_RX | IAB MT frequency domain configuration (IAB MT |
| | frequency allocation) |
| | {ARFCNY1 |
| | Quantity of RBs Y2} |
| >>DU_TX/MT_TX | IAB MT frequency domain configuration (IAB MT frequency allocation) |
| | {ARFCNY3 |
| | Quantity of RBs Y4} |

For example, a second row in Table 4 indicates that the IAB DU and the IAB MT support synchronous receiving, a start frequency of the available frequency domain resource of the IAB MT is Y1, and a quantity of RBs is Y2. A third row in Table 4 indicates that the IAB DU and the IAB MT support synchronous sending, a start frequency of the available frequency domain resource of the IAB MT is Y3, and a quantity of RBs is Y4. It may be understood that Y1, Y2, Y3, and Y4 shown herein are merely examples, and specific values represented by Y1, Y2, Y3, and Y4 are not limited in this embodiment of this application.

It may be understood that Table 3 and Table 4 are merely examples, and specific content of the available frequency domain resources is not limited in this embodiment of this application. For example, the available frequency domain resource of the IAB MT may further include an ARFCN and an end PRB, or a quantity of RBs and a start PRB, or a quantity of RBs and an end PRB. Details are not described herein again.

Regardless of which manner indicates the available frequency domain resource of the IAB MT, the donor node needs to learn of the bandwidth resource of the IAB MT based on a subcarrier spacing (sub-carrier spacing, SCS). For example, the available frequency domain resource includes an ARFCN and a quantity of RBs, and the quantity of RBs is 20. In this case, the donor node needs to learn of the bandwidth resource of the IAB MT based on a subcarrier length corresponding to each RB. In other words, the donor node and/or the IAB node need/needs to determine the bandwidth length of the available frequency domain resource of the IAB MT based on the reference SCS. That is, the reference SCS is used for determining the bandwidth length of the available frequency domain resource of the IAB MT. The following describes how to configure the reference SCS.

Method 1: The reference SCS is an SCS of the serving cell of the IAB MT. In other words, the reference SCS is an SCS of the first carrier of the IAB MT. For example, the reference SCS is an SCS of the serving cell (for example, the first carrier) of the IAB MT by default. For another example, the reference SCS indicated in the first information is the SCS of the serving cell of the IAB MT.

Method 2: The reference SCS is defined in a protocol. For example, the reference SCS is an SCS configured for an initial bandwidth part (initial bandwidth part, initial BWP, or referred to as a default BWP) of the reference MT.

Method 3: Explicitly configure the reference SCS. For example, the first information includes indication information that indicates the reference SCS. For example, the IAB node reports fifth indication information to the donor node of the IAB node, and the fifth indication information indicates the reference SCS. In other words, the reference SCS may be included in the first information, or the IAB node may indicate the reference SCS or the like to the donor node of the IAB node by using other information (for example, the fifth indication information). How to explicitly configure the reference SCS is not limited in this embodiment of this application.

In this embodiment of this application, the IAB node reports the available frequency domain resource of the IAB MT of the IAB node to the donor node. The donor node can configure access and backhaul resources for the IAB DU based on the available frequency domain resource of the IAB MT. In addition, when the IAB MT occupies the available frequency domain resource, the IAB DU can avoid, as much as possible, a frequency domain resource overlapping with the available frequency domain resource. In this way, a waste of frequency domain resources shown in FIG. 5 is improved, and spectrum efficiency of a network is also improved.

It may be understood that the foregoing embodiments are all shown by using an example in which the first condition includes an available frequency domain resource of the IAB MT when the IAB MT and the IAB DU work synchronously. However, the first condition may alternatively include an unavailable frequency domain resource of the IAB MT when the IAB MT and the IAB DU work synchronously. For descriptions of the indication manner of the unavailable frequency domain resource of the IAB MT, refer to the foregoing descriptions of the available frequency domain resource of the IAB MT. Details are not described herein again.

### Implementation 2

The first condition includes: an expected transmit power of a DU of an upper-level node when the IAB MT and the IAB DU work synchronously, and/or an expected transmit power of the IAB MT when the IAB MT and the IAB DU work synchronously. In other words, the first condition includes: an expected transmit power of a DU of an upper-level node when the first carrier of the IAB MT and the first cell of the IAB DU work synchronously, and/or an expected transmit power of the IAB MT when the first carrier of the IAB MT and the first cell of the IAB DU work synchronously.

It may be understood that the transmit power shown in this embodiment of this application is only an expected transmit power of the DU of the upper-level node (which is referred to as an expected first transmit power below) or an expected transmit power of the IAB MT (referred to as an expected second transmit power below). In other words, even if the first information indicates the first condition, the related node may still determine the transmit power of the DU of the upper-level node, the transmit power of the IAB MT, or the like based on another constraint condition or the like. The expected first transmit power shown in this application may also be referred to as a reference transmit power of the DU of the upper-level node, and the expected second transmit power may also be referred to as a reference transmit power of the IAB MT.

Generally, when the IAB DU and the IAB MT work synchronously, for example, when a difference between a receive power when the IAB DU receives a signal and a receive power when the IAB MT receives a signal is excessively large, system performance loss occurs. For another example, when a difference between a transmit power when the IAB DU sends a signal and a transmit power when the IAB MT sends a signal is excessively large, interference occurs. The synchronous working shown herein is only an example. For description of the synchronous working, refer to the foregoing description. Details are not described herein again.

In view of this, the IAB node may report the expected first transmit power or the expected second transmit power to the donor node.

Example 1: The IAB node reports the expected first transmit power to the donor node of the IAB node. In this way, the donor node can configure a related power parameter (for example, may be referred to as a first power parameter) for a DU of the upper-level node based on the expected first transmit power. To be specific, the first power parameter is determined based on the expected first transmit power. It may be understood that the first power parameter may be understood as one power parameter, or may be understood as a plurality of power parameters, or the like. This is not limited in this embodiment of this application. A specific parameter included in the first power parameter is not limited in this embodiment of this application. For example, for a method for determining the power based on the power parameter, refer to a related standard or protocol. Details are not described herein.

In this way, the upper-level node may determine an uplink transmit power of the upper-level node based on the first power parameter. Because the donor node determines the first power parameter based on the expected first transmit power reported by the IAB node, the uplink transmit power determined by the upper-level node based on the first power parameter is the foregoing expected first transmit power to a large extent. Alternatively, a power difference between the uplink transmit power determined by the upper-level node based on the first power parameter and the expected first transmit power is within a specific range (for example, an acceptable range). Further, a power difference between a receive power when the IAB MT receives a signal from the DU of the upper-level node and a receive power when the IAB DU receives a signal from the lower-level node or the UE can be ensured to be within a specific range (for example, within a first value range). Example 2: When the upper-level node of the IAB node is the donor node, the IAB node reports the expected first transmit power to the donor node. In this way, the transmit power of the donor node is equal to the expected first transmit power as much as possible, or a power difference between the transmit power of the donor node and the expected first transmit power is within a specific range. Therefore, a power difference between a receive power when the IAB MT receives a signal from the donor node and a receive power when the IAB DU receives a signal from the lower-level node or the UE can also be ensured to be within a specific range.

It can be learned from the foregoing example 1 and example 2 that, for example, the expected transmit power of the DU of the upper-level node may be determined based on measurement performed by the IAB MT on a reference signal sent by the DU of the upper-level node. Specifically, a receive power RSRP or an SINK (signal to interference plus noise ratio) of a downlink reference signal sent by the DU of the upper-level node may be measured. For example, the expected transmit power of the DU of the upper-level node may be determined based on a range of the receive power of the IAB MT or the IAB DU. A specific value of the expected transmit power of the DU of the upper-level node is not limited in this embodiment of this application. For example, the IAB node may indicate the expected first transmit power to the donor node by using a power range of the expected first transmit power. For example, the first information includes a maximum value of the expected first transmit power and a minimum value of the expected first transmit power. For example, the IAB node may indicate the expected first transmit power to the donor node by using an offset value of the expected first transmit power. For example, the first information includes an offset value of the expected first transmit power, for example, -x dB.

Example 3: The IAB node reports the expected second transmit power to the donor node of the IAB node. In this way, the donor node can configure a related power parameter (for example, may be referred to as a second power parameter) for the IAB MT based on the expected second transmit power. It may be understood that for descriptions of the second power parameter, refer to the foregoing descriptions of the first power parameter. Details are not described herein again. Therefore, the IAB node determines an uplink transmit power of the IAB MT based on the second power parameter. Because the donor node determines the second power parameter based on the expected second transmit power, the uplink transmit power of the IAB MT determined by the IAB node based on the second power parameter may be the same as the expected second transmit power, or a power difference between the uplink transmit power of the IAB MT and the expected second transmit power may be within a specific range. Further, a power difference between the uplink transmit power when the IAB MT sends a signal to the upper-level node of the IAB node and the transmit power when the IAB DU sends a signal to the lower-level node of the IAB node or the UE may be ensured to be within a specific range as far as possible.

Therefore, severe interference caused by an excessively large transmit power difference between the IAB MT and the IAB DU is improved. This effectively reduces interference between the IAB MT and the IAB DU.

For example, the first information may include a nominal power (nominal power) of the expected second transmit power and/or an offset value (for example, -x dB) of the nominal power.

In this embodiment of this application, the IAB node reports the expected first transmit power to the donor node. In this way, system performance can be effectively improved, and an excessively large difference between the receive power when the IAB DU receives a signal and the receive power when the IAB MT receives a signal is improved. Alternatively, the IAB node reports the expected second transmit power to the donor node, to effectively improve interference, and improve an excessively large difference between the transmit power when the IAB DU sends a signal and the transmit power when the IAB MT sends a signal.

### Implementation 3

The first condition includes any one or more of the following:
a quantity of ports of the IAB MT when the IAB MT and the IAB DU work synchronously, where the quantity of ports is a quantity of ports of a demodulation reference signal (demodulation reference signal, DMRS) used for data transmission and/or data demodulation;
a quantity of ports of the IAB DU when the IAB MT and the IAB DU work synchronously, where the quantity of ports is a quantity of ports of a DMRS used for data transmission and/or data demodulation; and
a quantity of layers of the IAB node when the IAB MT and IAB DU work synchronously.

For example, the IAB node may include four TRX radio frequency channels in total. In addition, the IAB node may expect to use two of the four TRX radio frequency channels for backhaul and the other two for access, to implement spatial division transmission. Therefore, the IAB node may report a quantity of layers or a quantity of ports, so that the donor node can learn of an available quantity of layers or an available quantity of ports of the IAB node in a multiplexing scenario.

It may be understood that the foregoing available frequency domain resource, the expected first transmit power, the expected second transmit power, the quantity of ports, or the quantity of layers may be separately included in the first information, that is, the first information may include any one of the foregoing information. Alternatively, the first information may further include at least two pieces of the foregoing information, and the like. This is not limited in this embodiment of this application.

Generally, the IAB DU may report multiplexing capability information to the donor node (as shown in Table 1), and the multiplexing capability information may be carried by using an F1 interface application protocol. However, when related information is configured by using the F1 interface application protocol, a transmission delay is large. In other words, when related information needs to be updated in time, it is difficult to perform dynamic configuration by using the F1 interface application protocol configuration.

In view of this, embodiments of this application provide a communication method and apparatus based on IAB, to dynamically adjust the available frequency domain resource of the IAB MT.

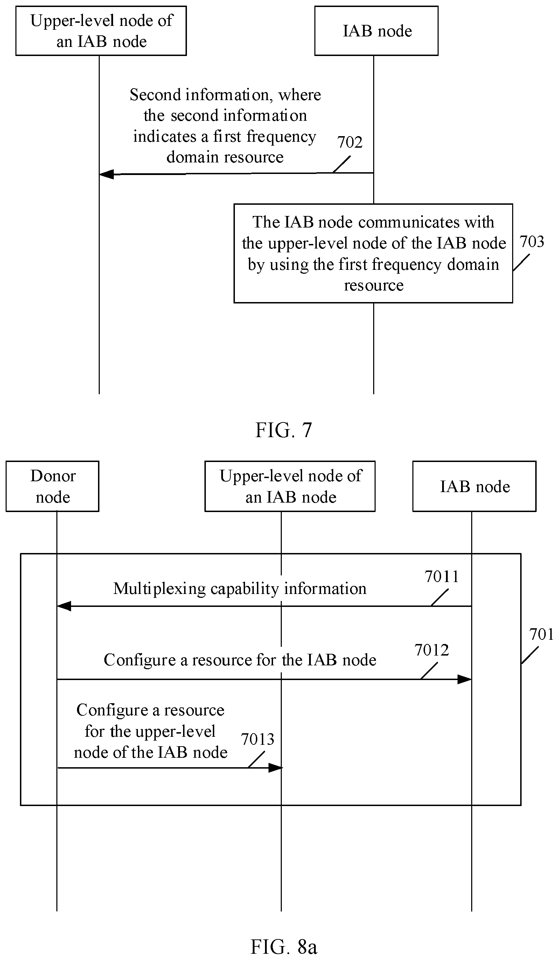

FIG. 7 is a schematic flowchart of a communication method based on IAB according to an embodiment of this application. For descriptions of a communication system and a communication apparatus to which the method is applicable, refer to the foregoing description. Details are not described herein again. As shown in FIG. 7, the method includes the following steps.

In a possible implementation, the method shown in FIG. 7 includes step 701.

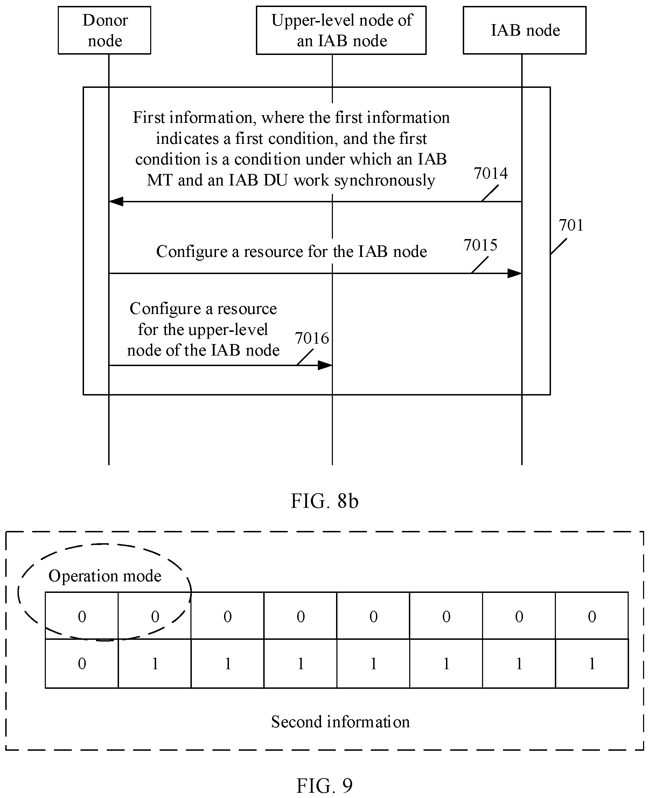

For a description of step 701, refer to FIG. 8a and FIG. 8b shown below. Details are not described herein.

702: An IAB node sends second information to an upper-level node of the IAB node, where the second information indicates a first frequency domain resource. Correspondingly, the upper-level node of the IAB node receives the second information.

For example, the second information may be included in a medium access control-control element (medium access control-control element, MAC-CE). For example, an IAB MT may send the second information to the upper-level node of the IAB node. The upper-level node of the IAB node may be a donor node, or may be another IAB node, or the like.

Optionally, the first frequency domain resource shown in this embodiment of this application may be understood as an available frequency domain resource of the IAB MT, or the first frequency domain resource may be understood as an unavailable frequency domain resource of the IAB MT. For descriptions of the unavailable frequency domain resource of the IAB MT, refer to FIG. 8a shown below. The unavailable frequency domain resource is not described herein again. Optionally, the first frequency domain resource may be included in an available frequency domain resource of the IAB MT shown in FIG. 6, or the first frequency domain resource may be included in an unavailable frequency domain resource of the IAB MT shown in FIG. 6. However, both an available frequency domain resource of the IAB MT and an unavailable frequency domain resource of the IAB MT may be included in a serving cell of the IAB MT, for example, a carrier (for example, the first carrier shown above) of the IAB MT.

In a possible implementation, after the IAB node reports multiplexing capability information to the donor node, the IAB node sends the second information to the upper-level node of the IAB node. As shown in FIG. 8a, step 701 may include the following steps.

7011: The IAB node reports the multiplexing capability information to the donor node of the IAB node. Correspondingly, the donor node receives the multiplexing capability information. It may be understood that for a description of the multiplexing capability information, refer to the foregoing description of Table 1. For example, the multiplexing capability information includes any one of the following: The IAB MT and the IAB DU support synchronous receiving, the IAB MT and the IAB DU support synchronous sending, the IAB DU supports sending when the IAB MT supports sending, and the IAB DU supports receiving when the IAB MT supports receiving.

7012: The donor node configures a resource for the IAB node.

7013: The donor node configures a resource for the upper-level node of the IAB node.

It may be understood that for descriptions of step 7012 and step 7013, refer to the foregoing description. Details are not described herein again.

That is, in FIG. 8a, after the IAB node reports the multiplexing capability information to the donor node of the IAB node, the IAB node may further dynamically send the first frequency domain resource to the upper-level node of the IAB node. The first frequency domain resource may be understood as an available frequency domain resource of the IAB MT when the IAB MT and the IAB DU work synchronously. That is, if the method shown in FIG. 7 is not combined with the method shown in FIG. 6, the first frequency domain resource may be understood as an available frequency domain resource of the IAB MT when the IAB MT and the IAB DU work synchronously. A relationship between the available frequency domain resource of the IAB MT shown herein and the available frequency domain resource of the IAB MT shown in FIG. 6 is not limited in this embodiment of this application.

In this embodiment of this application, when the upper-level node of the IAB node receives no second information, the upper-level node of the IAB node may consider, by default, that the IAB MT of the subnode and the IAB DU of the subnode are time division multiplexed. In other words, the upper-level node does not schedule the MT for transmission through frequency division multiplexing, that is, the upper-level node does not schedule the MT of the subnode for transmission on a time resource on which the DU of the subnode works.

In actual transmission, a bandwidth resource required by an IAB MT or an IAB DU is usually not constant due to a fluctuation of a data throughput. If semi-persistent configuration is performed by using higher layer signaling, and a data transmission requirement on either side of the MT or the DU is small, a resource waste is also caused when a pre-allocated frequency domain resource is excessive/redundant. In the method shown in FIG. 6, semi-persistent frequency domain resource division of the IAB MT and the IAB DU is implemented. However, the IAB MT and the IAB DU may not always work based on the configured bandwidth. For example, the IAB DU may use a 100 MHz frequency domain resource in the bandwidth. If the IAB MT and the IAB DU need to work synchronously, the IAB MT can use only 0 MHz to 50 MHz in 100 MHz. According to a size of data that needs to be transmitted at each moment, the IAB MT may not always use 50 MHz when performing frequency division multiplexing with the IAB DU. Therefore, in this embodiment of this application, with reference to the method shown in FIG. 6, the IAB MT may use an available frequency domain resource of the IAB MT.

In view of this, in another possible implementation, after the IAB node reports first information to the donor node, the IAB node sends the second information to the upper-level node of the IAB node. As shown in FIG. 8b, step 701 may include the following steps.

7014: An IAB node reports first information to a donor node of the IAB node, where the first information indicates a first condition, and the first condition is a condition under which an IAB MT and an IAB DU work synchronously. Correspondingly, the donor node receives the first information.

It may be understood that, for descriptions of the first information, the first condition, or the like, refer to the method shown in FIG. 6. Details are not described herein again. For example, the first condition includes an available frequency domain resource of the IAB MT. In this case, the first frequency domain resource is included in the available frequency domain resource of the IAB MT. In other words, with reference to the methods shown in FIG. 6 and FIG. 7, the first frequency domain resource may be understood as a subset of the available frequency domain resource of the IAB MT.

7015: The donor node configures a resource for the IAB node.

7016: The donor node configures a resource for an upper-level node of the IAB node.

In this embodiment of this application, when the upper-level node of the IAB node receives no second information, the available frequency domain resource of the IAB MT (the available frequency domain resource of the IAB MT when the IAB MT and the IAB DU work synchronously) reported by the IAB node can be used for frequency division multiplexing by default. In other words, all bandwidths of the IAB MT under the first condition constraint may be multiplexed in frequency domain.

It may be understood that for descriptions of step 7015 and step 7016, refer to the foregoing description. Details are not described herein again.

It may be understood that step 7011 to step 7013 and step 7014 to step 7016 may be understood as embodiments that are independent of each other, and this does not indicate that step 7011 to step 7016 are an embodiment.

703: The IAB node communicates with the upper-level node of the IAB node by using the first frequency domain resource.

For example, the foregoing available frequency domain resource of the IAB MT may be included in a first carrier of the IAB MT. That is, the first frequency domain resource is further included in the first carrier. Therefore, the IAB MT communicates with the upper-level node of the IAB node by using the first frequency domain resource. Alternatively, the IAB MT communicates with a DU of the upper-level node of the IAB node by using the first frequency domain resource. The following describes in detail the second information provided in this embodiment of this application.

In a possible implementation, the second information includes second indication information, and the second indication information indicates a start RB and a quantity of RBs the first frequency domain resource.

For example, the second indication information may be an index value, and the index value indicates a start RB and a quantity of RBs of the first frequency domain resource. In other words, the IAB node may indicate the start RB and the quantity of RBs of the first frequency domain resource to the upper-level node of the IAB node by using an index value. For example, a relationship between the index value and the start RB and the quantity of RBs of the first frequency domain resource may be shown in Table 5.

**Table 5**

| Start RB number | Quantity of RBs | Index |
|---|---|---|
| Z1 | Z11 | 0 |
| | Z12 | 1 |
| | Z13 | 2 |
| | Z14 | 3 |
| | Z15 | 4 |
| | Z16 | 5 |
| | Z17 | 6 |
| | Z18 | 7 |
| Z2 | Z21 | 8 |
| | Z22 | 9 |
| | Z23 | 10 |
| | Z24 | 11 |
| | Z25 | 12 |
| | Z26 | 13 |
| | Z27 | 14 |
| | Z28 | 15 |
| Z3 | Z31 | 16 |
| | Z32 | 17 |
| | Z33 | 18 |
| ... | | |

It may be understood that Z1, Z2, and Z3 shown in Table 5 are merely examples, and specific values of Z1, Z2, and Z3 are not limited in this embodiment of this application. In addition, a value of the quantity of RBs such as Z11 to Z18, Z21 to Z28, and Z31 to Z33 is only a quantity of RBs related to the start RB number. Specific values of the foregoing letters are not limited in this embodiment of this application either. For example, as shown in Table 5, a start RB corresponding to an index 0 is Z1, and a quantity of RBs is Z11. In other words, if the second indication information is 0, the upper-level node of the IAB node may learn, based on the index value 0, that the start RB number of the first frequency domain resource is Z1, and the quantity of RBs of the first frequency domain resource is Z11.

For ease of understanding, an embodiment of this application shows a specific example, as shown in Table 6.

**Table 6**

| Start RB number | Length (a quantity of RBs) | Index |
|---|---|---|
| 0 | 1 | 0 |
| | 2 | 1 |
| | 3 | 2 |
| | 4 | 3 |
| | 5 | 4 |
| | 6 | 5 |
| | 7 | 6 |
| | 8 | 7 |
| 1 | 1 | 8 |
| | 2 | 9 |
| | 3 | 10 |
| | 4 | 11 |
| | 5 | 12 |
| | 6 | 13 |
| | 7 | 14 |
| | 8 | 15 |
| 2 | 1 | 16 |
| | 2 | 17 |
| | 3 | 18 |
| ... | | |

It can be understood that Table 5 and Table 6 are merely examples, and the foregoing table merely shows an example of a combination of a part of index values and bandwidths indicated by the part of index values.

It may be understood that the foregoing measuring the first frequency domain resource in a unit of an RB is merely an example. For example, the first frequency domain resource may be measured in a unit of an RE, a PRB, or the like. For example, the second indication information indicates a start RE and a quantity of REs of the first frequency domain resource. For another example, the second indication information indicates a start PRB and a quantity of PRBs (or a quantity of RBs) of the first frequency domain resource.

In another possible implementation, the second information may separately include information that indicates a start RB and a quantity of RBs of the first frequency domain resource. For example, the second information may include information that indicates a start RB of the first frequency domain resource and information that indicates a quantity of RBs of the first frequency domain resource.

In still another possible implementation, the second information includes third indication information, the third indication information includes N bits, each of the first N-1 bits of the N bits indicates whether a preset quantity of PRBs are available, the last bit of the N bits indicates whether the remaining quantity of PRBs are available.

Optionally, the remaining quantity is determined based on a quantity of PRBs included in the first frequency domain resource and a quantity of PRBs corresponding to the N-1 bits, and N is an integer greater than 0. In this case, the third indication information may indicate that a part of bandwidths in the first frequency domain resource are available and/or a part of bandwidths are unavailable.

Optionally, the remaining quantity is determined based on a quantity of PRBs included in the available frequency domain resource of the IAB MT and a quantity of PRBs corresponding to the N-1 bits, and N is an integer greater than 0. In this case, the third indication information may indicate that a part of bandwidths in the available frequency domain resource of the IAB MT are available and/or a part of bandwidths are unavailable. The following uses an example in which the remaining quantity is determined based on the quantity of PRBs included in the available frequency domain resource of the IAB MT and the quantity of PRBs corresponding to the N-1 bits to describe the third indication information provided in this embodiment of this application with reference to a specific example.

It may be understood that the preset quantity may be the same as or different from the remaining quantity. This is not limited in this embodiment of this application. A specific value of N is not limited in this embodiment of this application. For example, N may be a fixed value, or N may be determined based on a quantity of PRBs included in the first frequency domain resource and a preset quantity, or N may be determined based on a quantity of PRBs included in the available frequency domain resource of the IAB MT and a preset quantity, or the like.

Optionally, each of the first N-1 bits of the N bits indicates whether a fixed quantity of PRBs are available. That is, the preset quantity may be understood as a fixed quantity. A specific value of the fixed quantity is not limited in this embodiment of this application. For example, the preset quantity is equal to any one of 10, 20, 30, and the like. For example, the bandwidth of the first frequency domain resource is 200 MHz, a quantity of PRBs in the 200 MHz is 275, and a preset quantity is 20. The third indication information includes 14 bits, and each of first 13 bits indicates whether 20 PRBs are available. The first 13 bits may indicate whether 13*20=260 PRBs are available, and the last bit indicates whether 275-260=15 PRBs are available.

It may be understood that the foregoing example is shown by using an example in which the preset quantity is a fixed quantity. Optionally, the preset quantity may be further determined based on a bandwidth length of the first frequency domain resource and N. For example, the bandwidth of the first frequency domain resource is 200 MHz, the quantity of PRBs in the 200 MHz is 275, and N=14. In this case, each of the first N-1 bits of the N bits indicates whether the 19 PRBs are available. 19 may be obtained by rounding down to the nearest integer of 275/14, that is, 275/14≈19.64, and a result obtained by rounding down to the nearest integer of 19.64 is 19. The last bit of the N bits indicates whether 275-19* 13=28 PRBs are available. It may be understood that 19 obtained by rounding down to the nearest integer is merely an example. For example, 20 may be obtained by rounding up to the nearest integer of 275/14.

It may be understood that N=14 shown herein is merely an example. Optionally, N may be configured by a protocol, for example, N is a fixed value. Optionally, N may alternatively be determined based on the bandwidth of the first frequency domain resource and the quantity of PRBs indicated by each bit, or the like. A specific value of N is not limited in this embodiment of this application.

It may be understood that each bit shown above indicates whether a specific quantity of PRBs are available, and that a PRB is used as a unit is merely an example. In this embodiment of this application, an RB or an RE may be alternatively used as a unit. For example, each bit may indicate whether a specific quantity of RBs are available, or each bit may indicate whether a specific quantity of REs are available. It may be understood that, in the foregoing implementations, that the second information includes information that indicates the first frequency domain resource is described. For example, the second information includes second indication information, third indication information, or the like. In addition to the foregoing information, the second information may further include fourth indication information. The fourth indication information indicates an operation mode of the IAB node. The operation mode of the IAB node may include any one of the following: The IAB DU receives a signal from a lower-level node of the IAB node or UE, and simultaneously, the IAB MT receives a signal from an upper-level node of the IAB node, that is, it may also be understood that the IAB DU and the IAB MT described above support synchronous receiving;
the IAB DU sends a signal to a lower-level node of the IAB node or UE, and simultaneously, the IAB MT sends a signal to an upper-level node of the IAB node, that is, it may also be understood that the IAB DU and the IAB MT described above support synchronous sending;
the IAB DU sends a signal to a lower-level node of the IAB node or UE, and simultaneously, the IAB MT receives a signal from an upper-level node of the IAB node, that is, it may also be understood that the IAB DU described above supports sending, and simultaneously, the IAB MT supports receiving; and
the IAB DU receives a signal from a lower-level node of the IAB node or UE, and simultaneously, the IAB MT sends a signal to an upper-level node of the IAB node, that is, it may also be understood that the IAB DU described above supports receiving, and simultaneously, the IAB MT supports sending.

It may be understood that the operation mode shown above is merely an example. For a description of the operation mode, refer to the foregoing description of Table 1. Details are not described herein again.

For example, FIG. 9 is a schematic diagram of 16 bits included in second information. As shown in FIG. 9, first two bits of the 16 bits may indicate an operation mode, and the 16 bits from a third bit to a sixteenth bit may indicate a first frequency domain resource. As shown in Table 7, Table 7 shows an example of an operation mode indication method. For example, "00" may indicate that an IAB MT and an IAB DU support synchronous receiving (that is, DU RX/MT RX), "01" may indicate that the IAB MT and the IAB DU support synchronous sending (that is, DU TX/MT_TX), "10" may indicate that the IAB MT supports receiving, and simultaneously, the IAB DU supports sending (that is, DU_TX/MT_RX), and "11" may indicate that the IAB MT supports sending, and simultaneously, the IAB DU supports receiving (that is, DU_RX/MT_TX). Therefore, FIG. 9 shows an example in which the operation mode is that the IAB MT and the IAB DU support synchronous receiving. From the third bit to the sixteenth bit, "0" may indicate that a preset quantity of PRBs are unavailable, and "1" may indicate that a preset quantity of PRBs are unavailable. It may be understood that whether the quantity of PRBs indicated by the sixteenth bit is the same as that indicated by the foregoing bits is not limited in this embodiment of this application.

For example, the third bit to the sixteenth bit in FIG. 9 may indicate bandwidths that can be occupied starting from a PRB 0 of the first frequency domain resource. For example, the third bit to the fifteenth bit indicate whether 20 PRBs are available, and the sixteenth bit indicates whether 15 PRBs are available. As shown in FIG. 9, starting from the PRB 0, the PRB 0 to a PRB 19 (denoted as the PRB 0 to a PRB 19) are all unavailable, a PRB 20 to a PRB 39 are all unavailable, a PRB 40 to a PRB 59 are all unavailable, a PRB 60 to a PRB 79 are all unavailable, a PRB 80 to a PRB 99 are all unavailable, a PRB 100 to a PRB 119 are all unavailable, a PRB 120 to a PRB 139 are all unavailable, a PRB 140 to a PRB 159 are available, a PRB 160 to a PRB 179 are available, a PRB 180 to a PRB 199 are available, a PRB 200 to a PRB 219 are available, a PRB 220 to a PRB 239 are available, a PRB 240 to a PRB 259 are available, and a PRB 600 to a PRB 275 are available. In other words, frequency domain resources used by the IAB MT are the PRB 140 to the PRB 275. With reference to the available frequency domain resource and the first frequency domain resource of the IAB MT shown in FIG. 6, the PRB 0 to the PRB 275 shown herein may be understood as an available frequency domain resource that needs to be met by the IAB MT when the IAB MT and the IAB DU shown in FIG. 6 work synchronously, and the PRB 140 to the PRB 275 may be understood as the first frequency domain resource shown in FIG. 7.

**Table 7**

| Mode | Bit |
|---|---|
| DU_RX/MT_RX | 00 |
| DU_TX/MT_TX | 01 |
| DU_TX/MT_RX | 10 |
| DU_RX/MT_TX | 11 |

It may be understood that, in FIG. 9, the second information including 16 bits is merely an example. It should be understood that the second information may further include another quantity of bits. This is not limited in this embodiment of this application.

For example, the operation mode may further include any one of the following:
When there is unconditional, the IAB DU receives a signal from a lower-level node of the IAB node or UE, and synchronously, the IAB MT receives a signal from an upper-level node of the IAB node, that is, it may also be understood that the IAB DU and the IAB MT described above unconditionally support synchronous receiving;
when there is unconditional, the IAB DU sends a signal to a lower-level node of the IAB node or UE, and synchronously, the IAB MT sends a signal to an upper-level node of the IAB node, that is, it may also be understood that the IAB DU and the IAB MT described above unconditionally support synchronous sending;
when there is unconditional, the IAB DU sends a signal to a lower-level node of the IAB node or UE, and synchronously, the IAB MT receives a signal from an upper-level node of the IAB node, that is, it may also be understood that in the absence of a condition described above, the IAB DU supports sending, and synchronously, the IAB MT supports receiving;
when there is unconditional, the IAB DU receives a signal from a lower-level node of the IAB node or UE, and synchronously, the IAB MT sends a signal to an upper-level node of the IAB node, that is, it may also be understood that in the absence of a condition described above, IAB DU supports receiving, and synchronously, the IAB MT supports sending;
under a first condition, the IAB DU receives a signal from a lower-level node of the IAB node or UE, and synchronously, the IAB MT receives a signal from an upper-level node of the IAB node, that is, it may also be understood that the IAB DU and the IAB MT described above support synchronous receiving under the first condition;
under a first condition, the IAB DU sends a signal to a lower-level node of the IAB node or UE, and synchronously, the IAB MT sends a signal to an upper-level node of the IAB node, that is, it may also be understood that the IAB DU and the IAB MT described above support synchronous sending under the first condition;
under a first condition, the IAB DU sends a signal to a lower-level node of the IAB node or UE, and synchronously, the IAB MT receives a signal from an upper-level node of the IAB node, that is, it may also be understood that under the first condition described above, the IAB DU supports sending, and synchronously, the IAB MT supports receiving; and
under a first condition, the IAB DU receives a signal from a lower-level node of the IAB node or UE, and synchronously, the IAB MT sends a signal to an upper-level node of the IAB node, that is, it may also be understood that under the first condition described above, the IAB DU supports receiving, and synchronously, the IAB MT supports sending.

For example, the foregoing operation mode may include: When there is unconditional, the IAB DU receives a signal from a lower-level node of the IAB node or UE, and simultaneously, the IAB MT receives a signal from an upper-level node of the IAB node, that is, it may also be understood that the IAB DU and the IAB MT described above unconditionally support simultaneous receiving. For another example, under the first condition, the IAB DU receives a signal from a lower-level node of the IAB node or UE, and simultaneously, the IAB MT receives a signal from an upper-level node of the IAB node. That is, it may also be understood that the IAB DU and the IAB MT described above support simultaneous receiving under the first condition. It may be understood that only an example of a relationship between simultaneous working and synchronous working is provided herein.

It may be understood that the no condition shown in this embodiment of this application is relative to the first condition. For a specific description of the first condition, refer to the foregoing description of FIG. 6. Details are not described herein again.

In this embodiment of this application, the IAB node reports the second information. In this way, frequency division multiplexing resource allocation can be dynamically changed between the IAB MT and the IAB DU. This improves spectrum efficiency.

It can be understood that, in the foregoing embodiments, for a part that is not described in detail in one embodiment, refer to another embodiment or the like.

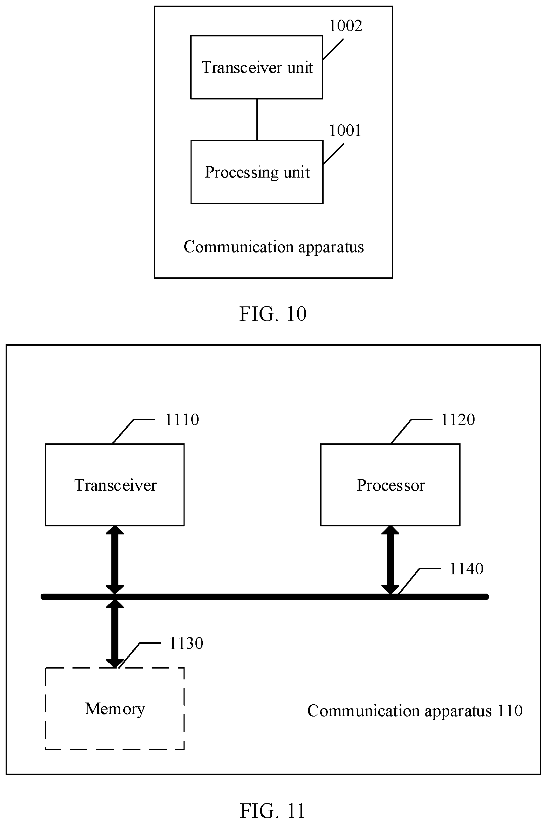

The following describes communication apparatuses provided in embodiments of this application. In this application, the communication apparatus is divided into functional modules based on the foregoing method examples. For example, functional modules corresponding to functions may be obtained through division, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail a communication apparatus in an embodiment of this application with reference to FIG. 10 to FIG. 12.

FIG. 10 is a schematic diagram of a structure of a communication apparatus according to an embodiment of this application. As shown in FIG. 10, the communication apparatus includes a processing unit 1001 and a transceiver unit 1002. The communication apparatus may be the IAB node shown above, a chip in the IAB node, or the like. That is, the communication apparatus may be configured to perform steps, functions, or the like performed by the IAB node (including the IAB MT and/or the IAB DU) in the foregoing method embodiments.

For example, the transceiver unit 1002 is configured to output first information (including reporting the first information to a donor node of the IAB node, or sending the first information to a donor node of the IAB node). The processing unit 1001 is configured to: under a first condition, communicate with a lower-level node of the communication apparatus or UE, and synchronously, communicate with an upper-level node of the communication apparatus.

That the processing unit 1001 shown herein communicates with a lower-level node of the communication apparatus or LTE and synchronously communicates with an upper-level node of the communication apparatus under the first condition may be understood as follows:
1. The processing unit 1001 may communicate, under the first condition by using the transceiver unit 1002, with a lower-level node of the communication apparatus or UE, and synchronously, communicate with an upper-level node of the communication apparatus.
2. The processing unit 1001 is configured to process a signal input by the transceiver unit 1002, or is configured to process a signal output by the transceiver unit 1002. The signal input by the transceiver unit 1002 herein includes a signal sent by a lower-level node of the communication apparatus, a signal sent by an upper-level node of the communication apparatus, or the like. The signal output by the transceiver unit 1002 herein includes a signal processed by the processing unit 1001 and the like.

For example, the transceiver unit 1002 is configured to output first indication information (including reporting the first indication information to a donor node of the IAB node, or sending the first indication information to a donor node of the IAB node).

For example, the transceiver unit 1002 is further configured to output second information (including sending the second information to an upper-level node of the IAB node). In this case, the processing unit 1001 is further configured to communicate with the upper-level node of the communication apparatus by using the first frequency domain resource. It may be understood that, for descriptions of the processing unit herein, refer to the foregoing descriptions of the processing unit. Details are not described herein again.

In this embodiment of this application, for descriptions of the first condition, the first information, the first indication information, the second information, the second indication information, the third indication information, and the like, refer to the shown embodiments. Details are not described herein again.

It may be understood that for specific descriptions of the transceiver unit and the processing unit shown above, refer to the steps performed by the IAB node in the foregoing method embodiments. For example, the transceiver unit 1002 may be configured to perform a sending step in step 601 and a receiving step in step 602 shown in FIG. 6, and the processing unit 1001 may be configured to perform step 604 shown in FIG. 6. For example, the transceiver unit 1002 may be further configured to perform the sending step in step 702 shown in FIG. 7, and the processing unit 1001 may be further configured to perform step 703 shown in FIG. 7. For example, the transceiver unit 1002 may be further configured to perform a sending step of step 7011 and a receiving step of step 7012 shown in FIG. 8a. For example, the transceiver unit 1002 may be further configured to perform the sending step in step 7014 and the receiving step in step 7015 shown in FIG. 8b.

The foregoing describes the IAB node in embodiments of this application, and the following describes possible product forms of the IAB node. It should be understood that any form of product that has a function of the IAB node described in FIG. 10 falls within the protection scope of embodiments of this application. It should be further understood that the following description is merely an example, and a product form of the IAB node in this embodiment of this application is not limited thereto.

In a possible implementation, in the communication apparatus shown in FIG. 10, the processing unit 1001 may be one or more processors, and the transceiver unit 1002 may be a transceiver, or the transceiver unit 1002 may be a sending unit and a receiving unit. The sending unit may be a transmitter. The receiving unit may be a receiver. The sending unit and the receiving unit are integrated into one component, for example, a transceiver. In this embodiment of this application, the processor and the transceiver may be coupled, or the like. A connection manner between the processor and the transceiver is not limited in this embodiment of this application.

As shown in FIG. 11, a communication apparatus 110 includes one or more processors 1120 and a transceiver 1110.

In this embodiment of this application, when the communication apparatus 110 is an IAB node, for a method, a function, an operation, or the like performed by the processor 1120, refer to the method, the function, the operation, or the like performed by the processing unit 1001, and for a method, a function, an operation, or the like performed by the transceiver 1110, refer to the method, the function, the operation, or the like performed by the transceiver unit 1002.

It may be understood that for specific descriptions of the processor and the transceiver, refer to the descriptions of the processing unit and the transceiver unit shown in FIG. 10. Details are not described herein again.

In embodiments of the communication apparatus shown in FIG. 11, the transceiver may include a receiver device and a transmitter device. The receiver device is configured to perform a receiving function (or operation), and the transmitter device is configured to perform a transmitting function (or operation). The transceiver is configured to communicate with another device/apparatus through a transmission medium.

Optionally, the communication apparatus 110 may further include one or more memories 1130, configured to store program instructions and/or data. The memory 1130 is coupled to the processor 1120. Coupling in this embodiment of this application is indirect coupling or a communication connection between apparatuses, units, or modules, may be in electrical, mechanical, or other forms, and is used for information exchange between the apparatuses, the units, and the modules. The processor 1120 may operate in cooperation with the memory 1130. The processor 1120 may execute the program instructions stored in the memory 1130. Optionally, at least one of the one or more memories may be included in the processor.

A specific connection medium between the transceiver 1110, the processor 1120, and the memory 1130 is not limited in this embodiment of this application. In this embodiment of this application, the memory 1130, the processor 1120, and the transceiver 1110 are connected through a bus 1140 in FIG. 11. The bus is represented by using a thick line in FIG. 11. A manner of a connection between other components is merely an example for description, and is not limited thereto. The bus may be classified into an address bus, a data bus, a control bus, and the like. For ease of representation, only one thick line is used to represent the bus in FIG. 11, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the methods disclosed with reference to embodiments of this application may be directly executed and accomplished by a hardware processor, or may be executed and accomplished by using a combination of hardware and software modules in the processor.

In this embodiment of this application, the memory may include but is not limited to a nonvolatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this is not limited thereto. The memory in embodiments of this application may alternatively be a circuit or any other apparatus that can implement a storage function, and is configured to store the program instructions and/or the data. For example, the memory may be configured to store configuration information of a reference signal sequence.

It may be understood that the communication apparatus shown in this embodiment of this application may further have more components than those in FIG. 11, and the like. This is not limited in this embodiment of this application. The methods performed by the processor and the transceiver are merely examples. For specific steps performed by the processor and the transceiver, refer to the methods described above.

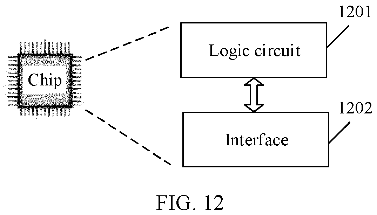

In another possible implementation, in the communication apparatus shown in FIG. 10, the processing unit 1001 may be one or more logic circuits, and the transceiver unit 1002 may be an input/output interface, or referred to as a communication interface, an interface circuit, an interface, or the like. Alternatively, the transceiver unit 1002 may be a sending unit and a receiving unit. The sending unit may be an output interface, and the receiving unit may be an input interface. The sending unit and the receiving unit are integrated into one unit, for example, an input/output interface. As shown in FIG. 12, the communication apparatus shown in FIG. 12 (FIG. 12 shows a chip as an example) includes a logic circuit 1201 and an interface 1202. That is, the processing unit 1001 may be implemented by using the logic circuit 1201, and the transceiver unit 1002 may be implemented by using the interface 1202. The logic circuit 1201 may be a chip, a processing circuit, an integrated circuit, a system on chip (system on chip, SoC) chip, or the like. The interface 1202 may be a communication interface, an input/output interface, or the like. In this embodiment of this application, the logic circuit may further be coupled to the interface. A specific connection manner of the logical circuit and the interface is not limited in this embodiment of this application. The interface 1202 is configured to output first information. The logic circuit 1201 is configured to: under a first condition, communicate with a lower-level node of the communication apparatus or UE, and synchronously, communicate with an upper-level node of the communication apparatus.

For example, the interface 1202 is further configured to output first indication information.

For example, the interface 1202 is further configured to output second information.

The communication apparatus shown in FIG. 12 may not include a memory, or the communication apparatus shown in FIG. 12 may further include a memory. Whether the communication apparatus shown in FIG. 12 includes a memory is not limited in this embodiment of this application.

For a specific implementation of each embodiment shown in FIG. 12, refer to the foregoing embodiments. Details are not described herein again. For example, for a description of the logic circuit, refer to the description of the processing unit. For a description of the interface, refer to the description of the transceiver unit. Details are not described herein again.

In this embodiment of this application, for descriptions of the first condition, the first information, the first indication information, the second information, the second indication information, the third indication information, and the like, refer to the shown embodiments. Details are not described herein again.

It may be understood that the communication apparatus shown in this embodiment of this application may implement the method provided in embodiments of this application in a form of hardware or in a form of software. This is not limited in embodiments of this application.

In addition, this application further provides a computer program. The computer program is used to implement operations and/or processing performed by an IAB node in the method provided in this application.

This application further provides a computer-readable storage medium. The computer-readable storage medium stores computer code. When the computer code is run on a computer, the computer is enabled to perform operations and/or processing performed by the IAB node in the method provided in this application.

This application further provides a computer program product. The computer program product includes computer code or a computer program. When the computer code or the computer program runs on a computer, operations and/or processing performed by the IAB node in the method provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the technical effects of the solutions provided in embodiments in this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable-storage medium, and includes several instructions for instructing a computer device (which may be a personal computer, a server, a network device, or the like) to perform all or some of the steps of the methods described in embodiments of this application. The readable-storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method based on integrated access and backhaul IAB, wherein the method comprises:
reporting, by an IAB node, first information to a donor node of the IAB node, wherein the first information indicates a first condition, and the first condition is a condition under which a mobile termination MT of the IAB node and a distributed unit DU of the IAB node work synchronously; and
under the first condition, communicating with, by the DU of the IAB node, a lower-level node of the IAB node or a terminal device, and synchronously, communicating with, by the MT of the IAB node, an upper-level node of the IAB node.

2. The method according to claim 1, wherein the method further comprises:
reporting, by the IAB node, first indication information to the donor node of the IAB node, wherein the first indication information indicates whether the first condition needs to be met when the MT of the IAB node and the DU of the IAB node work synchronously.

3. The method according to claim 1 or 2, wherein the first condition comprises an available frequency domain resource of the MT of the IAB node when the MT of the IAB node and the DU of the IAB node work synchronously.

4. The method according to claim 3, wherein the available frequency domain resource comprises any one or more of the following:
a start physical resource block PRB of the available frequency domain resource;
an end PRB of the available frequency domain resource;
an absolute radio frequency channel number ARFCN; and
a quantity of resource blocks RBs of the available frequency domain resource.

5. The method according to any one of claims 1 to 4, wherein the first condition comprises: an expected transmit power of a DU of an upper-level node when the MT of the IAB node and the DU of the IAB node work synchronously, and/or an expected transmit power of the MT of the IAB node when the MT of the IAB node and the DU of the IAB node work synchronously.

6. The method according to any one of claims 1 to 5, wherein the first condition comprises any one or more of the following:
a quantity of ports of the MT of the IAB node when the MT of the IAB node and the DU of the IAB node work synchronously, wherein the quantity of ports is a quantity of ports of a demodulation reference signal DMRS used for data transmission and/or data demodulation;
a quantity of ports of the DU of the IAB node when the MT of the IAB node and the DU of the IAB node work synchronously, wherein the quantity of ports is a quantity of ports of a demodulation reference signal DMRS used for data transmission and/or data demodulation; and
a quantity of layers of the IAB node when the MT of the IAB node and the DU of the IAB node work synchronously.

7. The method according to any one of claims 3 to 6, wherein the first information comprises indication information that indicates a reference subcarrier spacing SCS, and the reference SCS is used for determining a bandwidth length of the available frequency domain resource.

8. The method according to any one of claims 1 to 7, wherein the method further comprises:
sending, by the IAB node, second information to the upper-level node of the IAB node, wherein the second information indicates a first frequency domain resource, and the first frequency domain resource is comprised in the available frequency domain resource of the MT of the IAB node.

9. The method according to claim 8, wherein the second information comprises second indication information, and the second indication information indicates a start resource block RB of the first frequency domain resource and a quantity of RBs of the first frequency domain resource.

10. The method according to claim 9, wherein the second indication information is an index value, and the index value indicates the start RB of the first frequency domain resource and the quantity of RBs of the first frequency domain resource.

11. The method according to claim 8, wherein the second information comprises third indication information, the third indication information comprises N bits, each of the first N-1 bits of the N bits indicates whether a preset quantity of physical resource blocks PRBs are available, the last bit of the N bits indicates whether the remaining quantity of PRBs are available, the remaining quantity is determined based on a quantity of PRBs comprised in the first frequency domain resource and a quantity of PRBs corresponding to the N-1 bits, and n is an integer greater than 0.

12. The method according to any one of claims 9 to 11, wherein the second information further comprises fourth indication information, the fourth indication information indicates an operation mode of the IAB node, and the operation mode of the IAB node comprises any one of the following:
receiving, by the DU of the IAB node, a signal from the lower-level node of the IAB node or the terminal device, and synchronously, receiving, by the MT of the IAB node, a signal from the upper-level node of the IAB node;
sending, by the DU of the IAB node, a signal to the lower-level node of the IAB node or the terminal device, and synchronously, sending, by the MT of the IAB node, a signal to the upper-level node of the IAB node;
sending, by the DU of the IAB node, a signal to the lower-level node of the IAB node or the terminal device, and synchronously, receiving, by the MT of the IAB node, a signal from the upper-level node of the IAB node; and
receiving, by the DU of the IAB node, a signal from the lower-level node of the IAB node or the terminal device, and synchronously, sending, by the MT of the IAB node, a signal to the upper-level node of the IAB node.

13. The method according to any one of claims 8 to 12, wherein the second information is comprised in medium access control-control element MAC-CE signaling.

14. A communication apparatus, wherein the communication apparatus comprises:
a transceiver unit, configured to report first information to a donor node of the communication apparatus, wherein the first information indicates a first condition, and the first condition is a condition under which a mobile termination MT of the communication apparatus and a distributed unit DU of the communication apparatus work synchronously; and
a processing unit, configured to: under the first condition, implement communication between the DU of the communication apparatus and a lower-level node of the communication apparatus or a terminal device, and synchronously, implement communication between the MT of the communication apparatus and an upper-level node of the communication apparatus.

15. The communication apparatus according to claim 14, wherein
the transceiver unit is further configured to report first indication information to the donor node of the communication apparatus, wherein the first indication information indicates whether the first condition needs to be met when the MT of the communication apparatus and the DU of the communication apparatus work synchronously.

16. The communication apparatus according to claim 14 or 15, wherein the first condition comprises an available frequency domain resource of the MT of the communication apparatus when the MT of the communication apparatus and the DU of the communication apparatus work synchronously.

17. The communication apparatus according to claim 16, wherein the available frequency domain resource comprises any one or more of the following:
a start physical resource block PRB of the available frequency domain resource;
an end PRB of the available frequency domain resource;
an absolute radio frequency channel number ARFCN; and
a quantity of resource blocks RBs of the available frequency domain resource.

18. The communication apparatus according to any one of claims 14 to 17, wherein the first condition comprises: an expected transmit power of a DU of an upper-level node when the MT of the communication apparatus and the DU of the communication apparatus work synchronously, and/or an expected transmit power of the MT of the communication apparatus when the MT of the communication apparatus and the DU of the communication apparatus work synchronously.

19. The communication apparatus according to any one of claims 14 to 18, wherein the first condition comprises any one or more of the following:
a quantity of ports of the MT of the communication apparatus when the MT of the communication apparatus and the DU of the communication apparatus work synchronously, wherein the quantity of ports is a quantity of ports of a demodulation reference signal DMRS used for data transmission and/or data demodulation;
a quantity of ports of the DU of the communication apparatus when the MT of the communication apparatus and the DU of the communication apparatus work synchronously, wherein the quantity of ports is a quantity of ports of a demodulation reference signal DMRS used for data transmission and/or data demodulation; and
a quantity of layers of the communication apparatus when the MT of the communication apparatus and the DU of the communication apparatus work synchronously.

20. The communication apparatus according to any one of claims 16 to 19, wherein the first information comprises indication information that indicates a reference subcarrier spacing SCS, and the reference SCS is used for determining a bandwidth length of the available frequency domain resource.

21. The communication apparatus according to any one of claims 13 to 20, wherein
the transceiver unit is further configured to send second information to the upper-level node of the communication apparatus, wherein the second information indicates a first frequency domain resource, and the first frequency domain resource is comprised in the available frequency domain resource of the MT of the communication apparatus.

22. The communication apparatus according to claim 21, wherein the second information comprises second indication information, and the second indication information indicates a start resource block RB of the first frequency domain resource and a quantity of RBs of the first frequency domain resource.

23. The communication apparatus according to claim 22, wherein the first indication information is an index value, and the index value indicates the start RB of the first frequency domain resource and the quantity of RBs of the first frequency domain resource.

24. The communication apparatus according to claim 21, wherein the second information comprises third indication information, the third indication information comprises N bits, each of the first N-1 bits of the N bits indicates whether a preset quantity of physical resource blocks PRBs are available, the last bit of the N bits indicates whether the remaining quantity of PRBs are available, the remaining quantity is determined based on a quantity of PRBs comprised in the first frequency domain resource and a quantity of PRBs corresponding to the N-1 bits, and n is an integer greater than 0.

25. The communication apparatus according to any one of claims 22 to 24, wherein the second information further comprises fourth indication information, the fourth indication information indicates an operation mode of the communication apparatus, and the operation mode of the communication apparatus comprises any one of the following:
receiving, by the DU of the communication apparatus, a signal from the lower-level node of the communication apparatus or the terminal device, and synchronously, receiving, by the MT of the communication apparatus, a signal from the upper-level node of the communication apparatus;
sending, by the DU of the communication apparatus, a signal to the lower-level node of the communication apparatus or the terminal device, and synchronously, sending, by the MT of the communication apparatus, a signal to the upper-level node of the communication apparatus;
sending, by the DU of the communication apparatus, a signal to the lower-level node of the communication apparatus or the terminal device, and synchronously, receiving, by the MT of the communication apparatus, a signal from the upper-level node of the communication apparatus; and
receiving, by the DU of the communication apparatus, a signal from the lower-level node of the communication apparatus or the terminal device, and synchronously, sending, by the MT of the communication apparatus, a signal to the upper-level node of the communication apparatus.

26. The communication apparatus according to any one of claims 21 to 25, wherein the second information is comprised in medium access control-control element MAC-CE signaling.

27. A communication apparatus, comprising a processor, wherein
the processor is configured to execute computer-executable instructions in a memory, so that the method according to any one of claims 1 to 13 is performed.

28. A communication apparatus, comprising a processor and a memory, wherein
the memory is configured to store computer-executable instructions; and
the processor is configured to execute the computer-executable instructions stored in the memory, so that the method according to any one of claims 1 to 13 is performed.

29. A communication apparatus, comprising a processor, a memory, and a transceiver, wherein
the transceiver is configured to receive and/or send a signal;
the memory is configured to store computer-executable instructions; and
the processor is configured to execute the computer-executable instructions, so that the method according to any one of claims 1 to 13 is performed.

30. A communication apparatus, comprising a logic circuit and an interface, wherein the logic circuit is coupled to the interface;
the interface is configured to input and/or output code instructions; and
the logic circuit is configured to execute the code instructions, so that the method according to any one of claims 1 to 13 is performed.

31. A communication apparatus, wherein the communication apparatus is configured to perform the method according to any one of claims 1 to 13.

32. A computer-readable storage medium, wherein the computer-readable storage medium is configured to store a computer program, and when the computer program is executed, the method according to any one of claims 1 to 13 is performed.

33. A computer program product, wherein the computer program product comprises a computer program, and when the computer program is executed, the method according to any one of claims 1 to 13 is performed.

34. A computer program, wherein when the computer program is executed, the method according to any one of claims 1 to 13 is performed.
